Europäisches Patentamt

European Patent Office

Office européen des brevets

(11) Numéro de publication : **0 397 578 B1**

# (12) FASCICULE DE BREVET EUROPEEN

(45) Date de publication du fascicule du brevet :
29.07.92 Bulletin 92/31

(51) Int. Cl.⁵ : **B65B 3/32, F16K 41/10**

(21) Numéro de dépôt : **90401252.3**

(22) Date de dépôt : **11.05.90**

(54) **Doseur-distributeur d'au moins un produit pâteux et/ou liquide.**

(30) Priorité : **12.05.89 FR 8906316**

(43) Date de publication de la demande :
**14.11.90 Bulletin 90/46**

(45) Mention de la délivrance du brevet :
**29.07.92 Bulletin 92/31**

(84) Etats contractants désignés :
**CH DE ES FR GB IT LI**

(56) Documents cités :
**EP-A- 0 269 507**
**DE-A- 1 807 542**
**DE-A- 2 357 018**
**US-A- 2 105 864**
**US-A- 3 812 398**

(73) Titulaire : **ERCA HOLDING**
**Zone Industrielle de Courtaboeuf Avenue du**
**Pacifique**
**F-91942 Les Ulis Cédex (FR)**

(72) Inventeur : **Torterotot, Roland**
**Le Plessis Mornay**
**F-78730 Longvilliers (FR)**

(74) Mandataire : **Hasenrader, Hubert et al**
**Cabinet BEAU DE LOMENIE 55, rue**
**d'Amsterdam**
**F-75008 Paris (FR)**

Jouve, 18, rue Saint-Denis, 75001 PARIS

**Description**

La présente invention concerne un doseur-distributeur d'au moins un produit pâteux et/ou liquide contenu sous pression dans au moins un premier réservoir de stockage, doseur-distributeur du type comportant dans une première enceinte cylindrique, d'une part, une chambre supérieure d'alimentation raccordée, par une conduite d'alimentation plus ou moins longue, audit premier réservoir de stockage, et, d'autre part, une chambre inférieure de dosage séparée de ladite chambre d'alimentation par un piston-doseur fixé à l'extrémité inférieure d'un organe de commande pénétrant dans la dite première enceinte, coulissant de façon étanche dans ladite première enceinte et muni d'un passage central obturable par une soupape d'admission dont l'organe d'obturation sollicité par un ressort de rappel est guidé par rapport audit piston et coopère avec un siège de soupape entourant ledit passage central, une chambre de distribution prévue en aval de la chambre de dosage, ainsi qu'une soupape d'éjection dont l'organe d'obturation chargé par un ressort est disposé dans ladite chambre de distribution.

Dans un doseur-distributeur connu, par exemple par le brevet allemand DE-3 024 489, le clapet d'admission est disposé dans la chambre de dosage et sert de clapet de retenue s'ouvrant et se fermant automatiquement seulement en fonction du mouvement ascendant et du mouvement descendant. En outre le clapet d'admission est guidé directement sur le piston et le ressort de rappel dudit clapet est prévu au niveau du passage central du piston. Il en résulte une grande imprécision dans le dosage, notamment lorsque le produit à doser est de consistance pâteuse. En outre, le doseur-distributeur connu ne se prête pas au maintien de la stérilité à l'intérieur des chambres d'alimentation et de dosage.

Un but de la présente invention est de supprimer les inconvénients du doseur-distributeur connu et de proposer des mesures le rendant apte à conserver une ambiance stérile tout en permettant d'atteindre une grande précision de dosage.

Ce but est atteint avec un doseur-distributeur précédemment défini du fait que l'organe de commande du piston doseur est constitué par un premier tube de commande dont l'extrémité voisine de la soupape d'admission est obturée de façon étanche, que l'organe d'obturation tel qu'un clapet de la soupape d'admission est situé du côté de la chambre d'alimentation et est porté par l'extrémité fermée inférieure d'un deuxième tube de commande guidé dans le premier tube de commande et dépassant de l'extrémité inférieure de celui-ci, que sur son tronçon pénétrant dans l'enceinte, chaque tube de commande est entouré d'un soufflet, que l'espace annulaire existant entre le tronçon du premier tube de commande, tronçon pénétrant dans ladite enceinte et le premier soufflet est raccordé en permanence à l'atmosphère, que l'extrémité supérieure du premier soufflet entourant le premier tube de commande est fixée de façon étanche sur la paroi d'enceinte traversée par ledit premier tube et l'extrémité inférieure du premier soufflet est fixée de façon étanche sur la partie extrême inférieure dudit premier tube, que l'extrémité supérieure du deuxième soufflet entourant le deuxième tube de commande sur son tronçon dépassant de l'extrémité inférieure du premier tube de commande est fixée de façon étanche sur l'extrémité inférieure du premier tube en dessous du premier soufflet tandis que l'extrémité inférieure du deuxième soufflet est fixée de façon étanche sur l'extrémité inférieure du deuxième tube ou sur le clapet d'admission solidaire dudit deuxième tube, et que la partie extrême supérieure du deuxième tube de commande est guidée de façon étanche dans le premier tube et présente, à son extrémité supérieure, un piston de commande qui sépare le volume intérieur du premier tube en deux chambres dont l'une est à l'atmosphère et comporte le ressort de rappel agissant sur le clapet d'admission et dont l'autre est susceptible d'être raccordée à une source d'air comprimé ou à l'atmosphère, la pression d'air comprimé établie dans ladite autre chambre agissant sur ledit clapet d'admission dans le sens opposé à celui du ressort de rappel correspondant.

Grâce à cette conception le doseur-distributeur se prête à un dosage précis du produit en milieu stérile. En outre, en variant la course du piston-doseur, on peut varier la quantité de produit dosée et distribuée par course de refoulement du piston. Mais l'ouverture momentanée plus ou moins longue pendant la course de refoulement du piston-doseur permet également de faire varier la ou les quantités de produit distribuées par course de refoulement.

Pour parfaire la stérilité et la précision du doseur-distributeur, il est avantageux que l'organe d'obturation de la soupape d'éjection soit porté par l'extrémité fermée d'un troisième tube de commande qui, son tronçon pénétrant dans la chambre de distribution de l'enceinte de distribution, est entouré d'un troisième soufflet dont les extrémités sont fixées de façon étanche, d'une part, du côté de l'organe d'obturation de la soupape d'éjection, sur ledit troisième tube et, d'autre part, sur la paroi d'enceinte traversée par ledit troisième tube de commande dont l'autre extrémité porte, à l'extérieur de ladite enceinte traversée par le produit à distribuer, un piston de commande d'un vérin comportant deux chambres situées de part et d'autre dudit piston et dont l'une est susceptible d'être raccordée alternativement à l'atmosphère extérieure ou à une source d'air comprimé et dont l'autre est muni d'un ressort de rappel agissant sur ledit piston et l'organe d'obturation, à l'encontre de la pression établie dans la chambre, dans le sens de l'ouverture ou de fermeture de la soupape d'éjection.

Cette disposition permet d'obtenir des précisions remarquables quant aux quantités unitaires de produit distribué, notamment lorsque la fermeture de la soupape d'éjection est commandée par de l'air comprimé agissant sur le piston du vérin à l'encontre du ressort de rappel.

Des doseurs-distributeurs du type comportant un soufflet qui entoure l'organe de commande sur au moins une grande partie du tronçon pénétrant dans l'enceinte traversée par le produit, sont connus, par exemple, par le brevet français 2 609 697 (87 00 531) et son certificat d'addition 2 618 124 (87 09 966). Dans ce cas, une extrémité du soufflet est généralement fixée sur la paroi d'enceinte autour de l'ouverture de passage pour l'organe de commande, tandis que l'autre extrémité dudit soufflet est fixée, également de façon étanche, sur la partie extrême du tronçon de l'organe de commande, tronçon pénétrant à l'intérieur de ladite enceinte.

Les doseurs-distributeurs de produits alimentaires doivent être stérilisés sur place après chaque vidange et nettoyage. Cette stérilisation est réalisée, en particulier lorsqu'il s'agit d'un doseur-distributeur de produit stérile, à des températures de l'ordre de 130° C à 150° C et à des pressions de l'ordre de 4,0 à 5,0 kg/cm². Il s'est avéré que les membranes du commerce, généralement réalisées en une matière synthétique telle que du polyuréthane, du polypropylène, et.... ont une durée de vie assez courte, sont rapidement percées et doivent fréquemment être remplacées. Pour réduire ces inconvénients on a déjà proposé dans le certificat d'addition français 2 618 124 de réaliser la membrane sous forme d'un soufflet taillé dans la masse d'un bloc de matière synthétique telle que du polytétrafluoréthylène. Ce type de soufflet donne des résultats d'exploitation satisfaisante, mais est d'un prix de revient élevé et d'une réalisation délicate.

La présente invention a pour but de supprimer ces inconvénients et de proposer un doseur-distributeur permettant l'emploi des soufflets du commerce susceptibles de résister longtemps aux opérations répétées de stérilisation.

Dans le cas d'un doseur-distributeur du type ci-dessus mentionné, ce but est atteint du fait que chaque pli annulaire de chaque soufflet est associé à une rondelle de rigidification disposée dans ledit soufflet et autour du tube de commande correspondant de façon à pouvoir coulisser le long dudit tube en suivant les mouvements axiaux d'extension ou de compression ou rétraction du soufflet, et que l'espace annulaire existant entre chaque soufflet et le tube correspondant communique en permanence avec l'atmosphère extérieure.

Grâce à cette conception, les enceintes et les soufflets ainsi que tous les autres éléments et organes se trouvant à l'intérieur du doseur-distributeur peuvent d'abord être lavés et nettoyés en position d'extension des soufflets, et pendant l'application d'une pression élevée à l'intérieur des enceintes, les soufflets peuvent être mis en position comprimée dans laquelle les différents flancs latéraux des plis sont appliqués fermement, d'un côté, l'un contre l'autre et, de l'autre côté, contre l'une des rondelles de rigidification, les sommets des plis de soufflet étant soutenus par les rondelles de rigidification et les creux des plis par le tube de commande contre lequel ils reposent.

Il convient de remarquer que l'on connaît déjà par l'état de la technique illustré par exemple, par le brevet US-2 105 864, des soufflets munis de rondelles de rigidification. Cependant, dans ces cas, les soufflets à rondelles de rigidification sont utilisés dans le cadre des vannes exposées à des pressions élevées et/ou à des fluides fortement corrosifs avec des organes d'obturation dont les déplacements d'une position extrême à l'autre sont faibles, lents et peu fréquents et généralement commandés par un mécanisme à vis sans fin. On pouvait donc craindre que ces rondelles de rigidification ne puissent fonctionner correctement dans un doseur-distributeur dont le piston-doseur effectue plusieurs dizaines de courses relativement importantes par minute. Il s'est avéré de façon surprenante qu'en ne dépassant pas un rapport maximal de 2 entre l'ouverture axiale d'un pli de soufflet des plis et la largeur radiale correspondante de la rondelle de rigidification, ces rondelles pouvaient également être utilisées dans un doseur-distributeur conforme à l'invention.

Les différentes particularités et caractéristiques de l'invention seront encore mieux comprises à l'aide de la description suivante de plusieurs modes de réalisation, description en référence aux dessins annexés sur lesquels :

La figure 1 est une vue agrandie partielle en élévation d'une coupe axiale à travers une partie intermédiaire d'un doseur-distributeur selon l'invention, montrant ledit dispositif en position d'extension ;

Les figures 2a et 2b sont des vues en élévation d'une coupe axiale à travers respectivement la partie supérieure et la partie inférieure de dosage d'un doseur-distributeur selon l'invention ;

La figure 3 est une vue en élévation d'une coupe axiale à travers un doseur-distributeur ;

La figure 4 est une vue agrandie en élévation d'une coupe axiale montrant plus en détail une variante de la partie de dosage du doseur-distributeur, cette coupe étant faite suivant la ligne IV-IV de la figure 5 ;

La figure 5 est une vue en plan de la partie de dosage du doseur-distributeur suivant la ligne V-V de la figure 4 ;

La figure 6 est une vue enélévation d'une coupe axiale à travers une autre variante de la partie de dosage du doseur-distributeur ;

La figure 7 est une vue en élévation d'une coupe axiale à travers une variante de la partie de distribution du doseur-distributeur ;

La figure 8 est une vue en élévation d'une coupe axiale à travers d'une variante du doseur-distributeur dont le côté aval est raccordé à un mélangeur faisant également usage du dispositif écran ;

La figure 9 est une vue en élévation d'une coupe axiale à travers une variante du mélangeur de la figure 8 et

La figure 10 est une vue agrandie de la partie inférieure du mélangeur de la figure 9.

Un ensemble 1 d'un doseur-distributeur comporte un organe de commande 2 se présentant généralement sous la forme d'un tube. Cet ensemble intermédiaire 1 est utilisé dans un doseur-distributeur de produit pâteux et/ou liquide où un tronçon, par exemple un tronçon inférieur 2a, du tube de commande 2 est destiné à pénétrer dans une enceinte stérile 3 à partir de l'atmosphère extérieure ou d'un autre milieu pollué. Ce tronçon 2a du tube de commande 2 porte, à sa partie extrême située dans l'enceinte 3, un piston-doseur.

L'autre extrémité du tube de commande 2 traversant une paroi 3a de l'enceinte 3, extrémité située dans un milieu pollué ou dans l'atmosphère extérieure, coopère avec un vérin à double effet qui lui imprime des mouvements rectilignes de va-et-vient.

Cet ensemble intermédiaire 1 comprend une membrane en forme de soufflet 6 qui entoure le tube de commande 2 sur au moins la moitié, et de préférence la majeure partie du tronçon 2a pénétrant dans l'enceinte stériele 3. Une extrémité, par exemple l'extrémité supérieure 6a, du soufflet 6 est fixée de façon étanche sur la paroi d'enceinte 3a autour de l'ouverture de passage 7 pour le tube de commande 2. L'autre extrémité 6b du soufflet 6 est fixée, également de façon étanche, sur la partie extrême du tronçon de tube 2a pénétrant dans l'enceinte 3, ou sur l'élément de manoeuvre 4 solidaire de la partie extrême dudit tronçon de tube 2a.

On notera que du côté de l'extrémité portant le piston-doseur, le tube de commande 2 est obturé de façon étanche par tout moyen approprié. Le tronçon de tube 2a pénétrant dans l'enceinte stérile 3 est muni, dans la zone entourée par le soufflet 6, d'une pluralité de rondelles de rigidification 8 dont chacune coiffe ledit tronçon de tube 2a et est disposée en face et au contact du sommet 6c d'un pli annulaire de soufflet 6d. L'ouverture intérieure 8a de la rondelle 8 entoure le tube de commande 2 avec un jeu radial suffisant pour pouvoir coulisser le long dudit tube 2 en suivant les mouvements axiaux d'extension ou de rétraction du soufflet 6 qui généralement est réalisé en une matière synthétique usuelle telle que du polyuréthane, du polypropylène, du chlorure de vinyle, etc...

En position de compression ou rétraction du soufflet 6, la largeur radiale LP d'un pli de soufflet 6d est sensiblement égale à la somme de l'épaisseur ES de la paroi du soufflet 6, et de la largeur radiale LR d'une rondelle de rigidification ($LP = ES + LR$). Dans le cas où le soufflet 6 effectue fréquemment des mouvements alternatifs d'extension et de rétraction, par exemple plus d'une dizaine de ces mouvements par minute, il est avantageux de ne pas dépasser une valeur de 2 pour le rapport R entre l'ouverture (extension) axiale maximale OM d'un pli de soufflet 6d et la largeur radiale LR d'une rondelle 8. De préférence, ce rapport R est compris entre 0,8 et 1,5. L'espace annulaire 9 qui existe entre le tronçon 2a du tube de commande 2 et le soufflet 6 et qui contient les rondelles de rigidification 8 est raccordé en permanence à l'atmosphère. Pour établir cette liaison permanente entre l'espace annulaire 9 et l'atmosphère extérieure, on peut prévoir un guide annulaire nervuré longitudinalement disposé dans l'ouverture de passage 7 de l'enceinte 3 autour du tube de commande 2 de sorte que les nervures longitudinales du guide annulaire portent contre le tube 2 et les rainures longitudinales entre les nervures dudit guide assurent le raccordement de l'espace annulaire 9 à l'atmosphère extérieure. Selon une variante avantageuse, le tube de commande 2 comporte plusieurs passages transversaux 2b dont certains sont situés en face du soufflet 6 et dont au moins un autre est prévu à la partie extrême du tube 2, partie restent toujours à l'extérieur de l'enceinte 3, ces passages transversaux 2b relient l'intérieur du tube 2, d'une part, à l'espace annulaire 9 et, d'autre part, à l'atmosphère extérieure. Ces passages transversaux 2b peuvent être constitués par des fentes longitudinales relativement courtes ou des perforations, par exemple de forme circulaire, ménagées dans la paroi du tube de commande 2 et réparties sur le pourtour dudit tube 2 en face du soufflet 6 et à l'extrémité extérieure dudit tube 2.

Pour augmenter la durée de vie du soufflet 6, il est avantageux de prévoir à chaque extrémité 6a, 6b de ce dernier, un demi-pli annulaire 6e, 6f et d'associer ledit demi-pli 6e ou 6f à un épaulement annulaire d'appui 10a ou 10b dont la face en regard du soufflet 6 est parallèle eux rondelles de rigidification 8 et perpendiculaire à l'axe du tube de commande 2. L'épaulement d'appui 10a, 10b est de préférence situé à l'intérieur du soufflet 6. Celui (10b) des deux épaulements annulaires 10a, 10b situé du côté de l'élément de manoeuvre 4 est solidaire du tube de commande 2 et celui (10a) situé au niveau de le paroi d'enceinte 3a traversée par ledit tube 2 est fixé à ladite paroi 3a ou à un autre élément qui est solidaire de cette paroi 3a. Il convient de noter qu'en position de rétraction complète ou position compactée du soufflet 6, chaque pli de soufflet 6d est appliqué, d'une part, contre un pli voisin, et, d'autre part, contre la rondelle de rigidification 8 qui est coiffée par ledit pli de soufflet 6d et chaque demi-pli extrême 6e ou 6f porte contre l'épaulement d'appui correspondant 10a ou 10b. Bien entendu, cette position de rétraction complète du soufflet 6 n'est pas l'une des deux positions normales de fonctionnement, mais est celle qui est utilisée exclusivement pendant le processus de stérilisation de l'intérieur de l'enceinte 3.

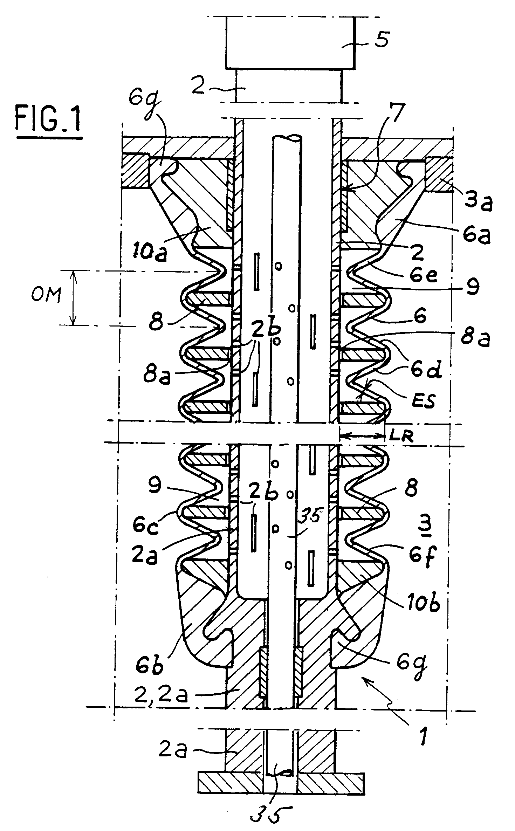

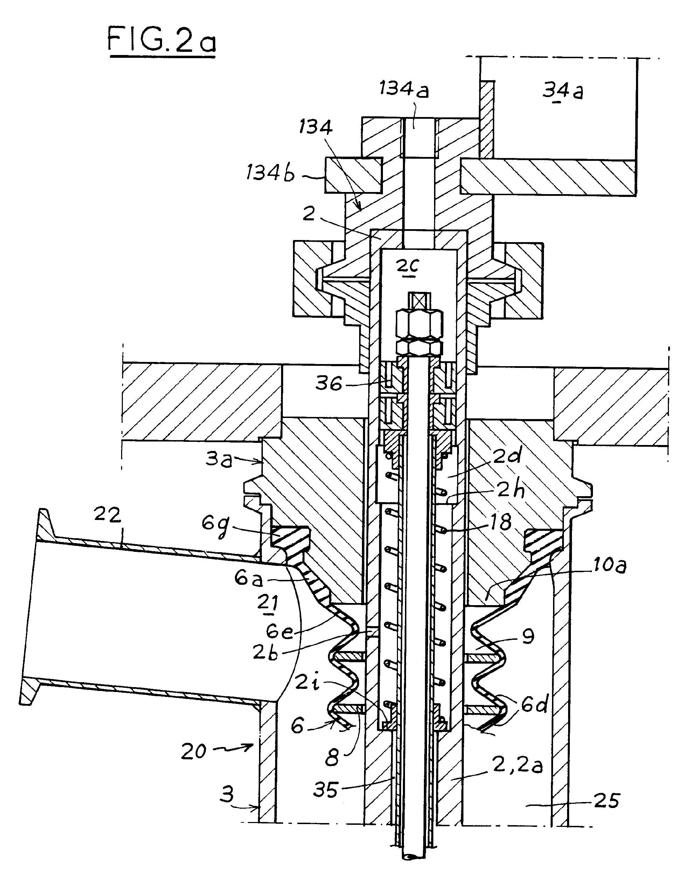

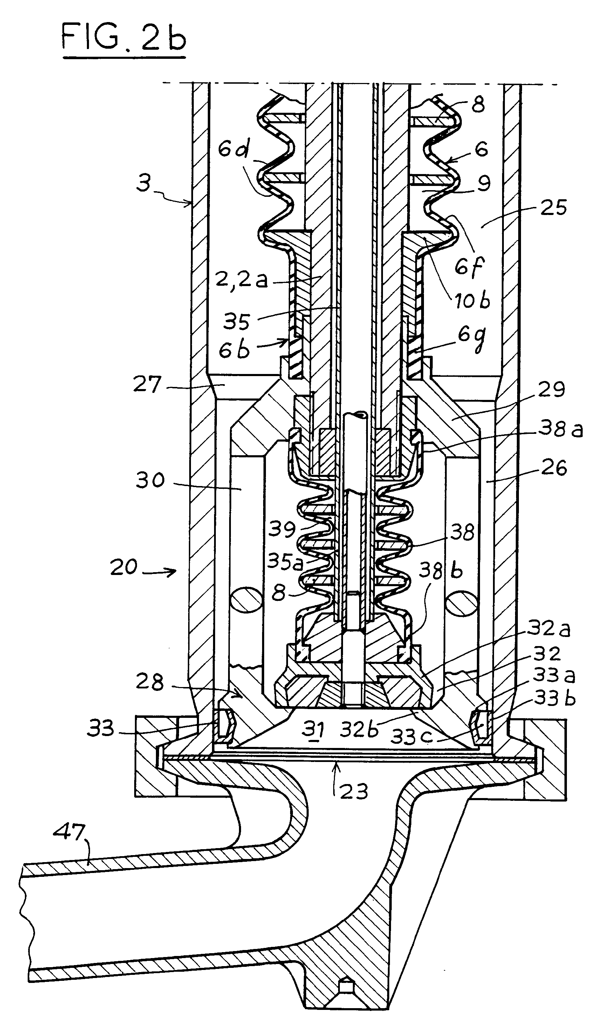

Pour faciliter le montage du soufflet 6, d'une part, sur le tube de commande 2 et, d'autre part, sur la paroi d'enceinte 3a, chaque extrémité de soufflet 6a, 6b comporte un bourrelet annulaire profilé de fixation 6g auquel se raccorde le demi-pli extrême correspondant 6e ou 6f du soufflet 6. De préférence, ce raccordement s'effectue sur la partie radialement extérieure dudit demi-pli 6e ou 6f. Comme il ressort clairement des figures 1 et 2, les gorges et nervures annulaires des deux bourrelets profilés constituant chacun l'une des extrémités 6e, 6b du soufflet 6 coopèrent avec des nervures et gorges annulaires correspondantes qui constituent des logements de retenue et sont ménagées soit sur un épaulement d'appui 10a, soit sur la paroi d'enceinte 3a, soit sur le partie extrême du tube de commande 2, partie extrême portant l'élément de manoeuvre 4. Il est à noter que l'épaulement d'appui inférieur 10b peut être logé autour du tube de commande 2 dans une cavité annulaire coaxiale de l'extrémité inférieure 6b du soufflet 6, extrémité 6b conformée en bourrelet profilé.

Cet ensemble comprend deux tubes de commandes 2 et 35 disposés coaxialement et partiellement l'un dans l'autre, comme ceci est schématiquement indiqué dans le figure 1 et sera décrit plus en détail en référence eux différentes variantes d'un doseur-distributeur faisant application de la structure générale de cet ensemble intermédiaire 1.

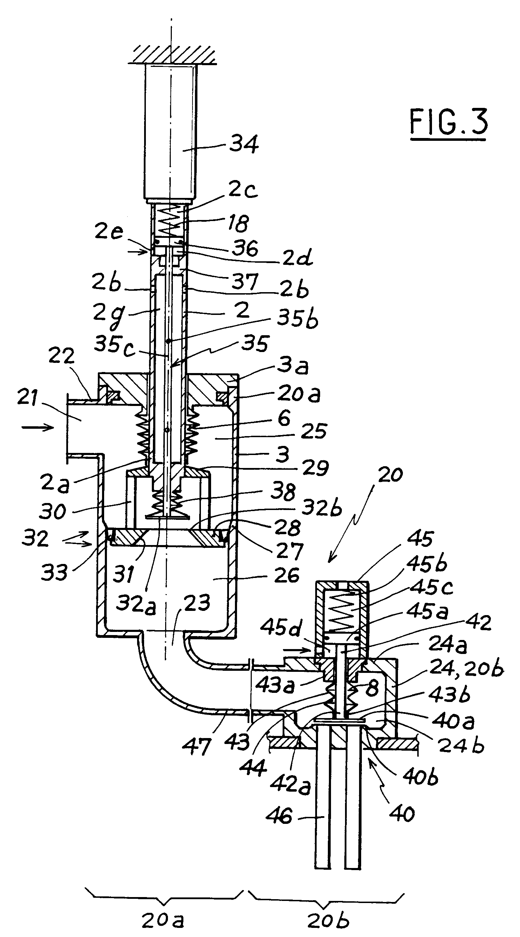

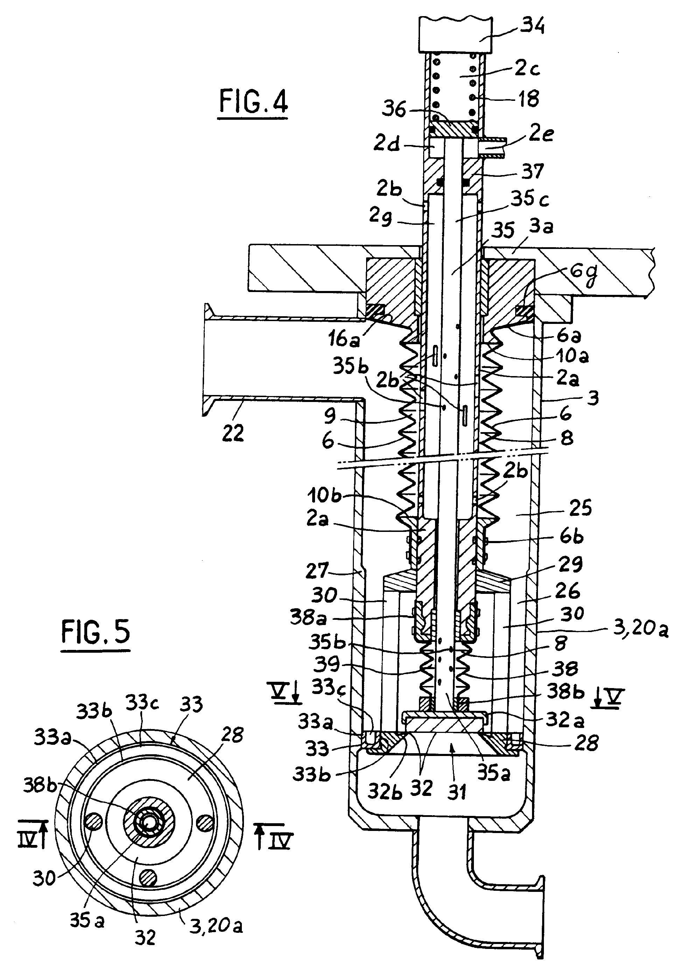

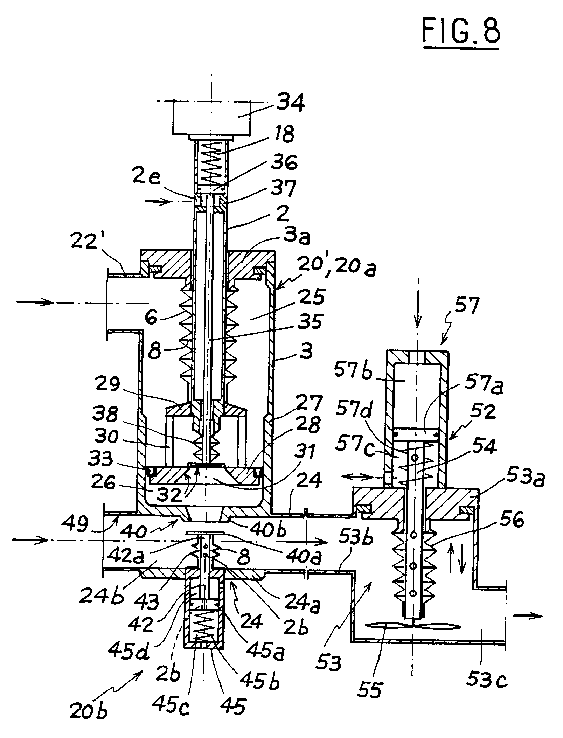

Tel que représenté sur les figures 2a, 2b et 3 à 7, le doseur-distributeur 20 comprend une première enceinte stérile 3 de forme tubulaire cylindrique qui, à la partie extrême supérieure, comporte une ouverture latérale 21 raccordée en permanence par une conduite d'alimentation 22 à un premier réservoir de stockage non représenté contenant un premier produit pâteux ou liquide sous pression. Le fond de l'enceinte 3 présente une ouverture de sortie 23 qui est raccordée soit en permanence (figures 3, 4 et 6), soit de façon intermittente (figure 8) à une deuxième enceinte 24, le cas échéant également stérile.

La première enceinte 3 constitue la partie de dosage 20a du doseur-distributeur 20 et la deuxième enceinte 24 constitue la partie de distribution 20b dudit doseur-distributeur 20. La première enceinte 3 présente une configuration cylindrique et comporte de haut en bas une chambre supérieure d'alimentation 25 reliée en permanence à la conduite 22 et à travers celle-ci au premier réservoir de stockage, et une chambre inférieure de dosage 26 qui peut présenter un diamètre légèrement inférieur à celui de la chambre d'alimentation 25. L'extrémité inférieure de la chambre d'alimentation 25 se raccorde à l'extrémité supérieure de la chambre de dosage 26 par un rétreint annulaire tronconique 27 se rétrécissant de haut en bas en direction de la chambre de dosage 26. Un piston-doseur 28 est monté de façon mobile dans la chambre de dosage 26 et peut y coulisser de façon étanche entre une position inférieure, dite position de refoulement, et une position haute, dite position d'aspiration, dans laquelle il se trouve le ces échéant juste en dessous du rétreint tronconique 27 et sépare le chambre d'alimentation 25 de la chambre de dosage 26. Toutefois, la position haute du piston-doseur 28, de même que la position inférieure de celui-ci peuvent varier en fonction de le quantité de produit à doser par course dudit piston-doseur. Bien entendu, en vue du nettoyage et de le stérilisation, le piston-doseur 28 peut être placé dans une position plus élevée que la position haute normale. Dans ce cas, il se trouve à l'intérieur de la chambre d'alimentation 25 et le fluide de nettoyage peut circuler autour du piston-doseur 28. Ce piston-doseur 28 est fixé à la partie extrême inférieure du tronçon 2a du premier tube de commande 2 par l'intermédiaire d'une bride transversale ayant le forme d'un disque circulaire ou tronconique 29 et de plusieurs tiges d'écartement 30 s'étendant parallélement à l'axe du premier tube de commande 2 entre la périphérie de la bride 29 solidaire dudit premier tube 2, et celle du piston-doseur 28 qui comporte un passage central 31 obturable par l'organe d'obturation 32a d'une soupape d'admission 32. Comme on peut le voir notamment sur les figures 2a, 2b et 3 à 5, le piston-doseur 28 comporte sur son pourtour un joint annulaire d'étanchéité 33 muni de deux lèvres 33a, 33b qui délimitent une gorge annulaire 33c ouverte en direction de la chambre d'alimentation 25 et les tiges d'écartement 30 sont fixées, d'une part, à le périphérie de le bride circulaire 29 et, d'autre part, sur le piston-doseur 28 entre le joint d'étanchéité 33 et le passage central 31 de ce dernier.

Le premier tube de commande 2 traverse la paroi supérieure 3a de l'enceinte 3 et à la manière décrite en référence à la figure 1 et y est guidé axialement lors de ses mouvements alternativement ascendant et descendant commandés par un vérin à double effet 34. L'extrémité supérieure du premier tube de commande 2 est donc fixée à la tige de piston 34a du vérin, par exemple pneumatique 34 dont le cylindre est installé à poste fixe. La liaison entre l'extrémité inférieure de la tige de piston 34a du vérin 34 est réalisée par tout moyen approprié tel qu'un dispositif de raccordement 134 fixé d'une part, à la tige de piston 34a et, d'autre part, à l'extrémité supérieure du premier tube de commande 2. L'extrémité inférieure du premier tube de commande 2 est obturée de façon étanche vis-à-vis de l'intérieur de l'enceinte 3, de le manière décrite ultérieurement. Comme dans l'exemple de la figure 1, le premier tube de commande 2 est entouré, sur son tronçon 2a pénétrant dans l'enceinte 3, d'un premier soufflet 6 dont l'extrémité supérieure est fixée de façon étanche sur la paroi d'enceinte 3a

traversée par ledit premier tube 2 et dont l'extrémité inférieure est fixée de façon étanche sur le partie extrême inférieure dudit premier tube 2. Egalement d'une façon identique ou similaire à l'exemple de la figure 1, chaque pli annulaire 6d est associé à une rondelle de rigidification 8 à l'intérieur dudit soufflet 6, ces rondelles 8 étant susceptibles de coulisser le long du premier tube 2, et l'espace annulaire 9 entre le premier soufflet 6 et le premier tube de commande 2 est raccordé en permanence à l'atmosphère extérieure de le manière précédemment décrite notamment en référence à la figure 1.

L'organe d'obturation 32a de la soupape d'admission 32 présente la forme d'un clapet et, par rapport au piston-doseur 28, est disposé du côté de la chambre d'alimentation 25, tout au moins lorsque ledit piston-doseur 28 occupe se position haute au voisinage de l'étreint tronconique 27, le bord supérieur du passage central 31 ménagé dans le piston-doseur 28 constituant le siège de soupape 32b de ladite soupape d'admission 32. Le passage central 31 du piston-doseur 28 présente avantageusement une forme tronconique qui s'élargit à partir de la chambre d'alimentation 25 vers le chambre de dosage 26. Le clapet d'admission 32a de la soupape d'admission est disposé dans l'enceinte 3 entre l'extrémité inférieure du premier tube de commande 2 au voisinage de celui-ci, et le passage central 31 du piston-doseur 28 écarté d'une distance déterminée de l'extrémité inférieure dudit premier tube 2 tout en étant fixé sur celui-ci. Grâce à cette disposition, le clapet d'admission 32a peut effectuer ses mouvements d'ouverture et de fermeture entre la face supérieure du piston-doseur 28 et l'extrémité inférieure du premier tube de commande 2. En outre, ce clapet d'admission 32a est porté par l'extrémité inférieure fermée d'un deuxième tube de commande 35 guidé dans le premier tube de commande 2 et dépassant de l'extrémité inférieure de celui-ci en dessous de le bride circulaire ou tronconique 29. A son extrémité supérieure, le deuxième tube de commande 35 porte un piston 36 qui coulisse de façon étanche dans le partie extrême supérieure du premier tube de commande 2 et sépare l'intérieur de ladite partie extrême supérieure en une chambre supérieure 2c et une chambre inférieure 2d qui, à son extrémité inférieure, est délimitée, soit par un épaulement annulaire interne 2h (figure 2a), soit par une cloison annulaire transversale 37 solidaire du premier tube de commande 2 et guidant de façon étanche le partie extrême supérieure du deuxième tube de commande 35 (figures 3, 4, 6 et 8). La chambre supérieure 2c est, dans l'exemple des figures 2a, 2b, raccordée à travers un alésage central 134a et une valve de commande non représentée, soit à l'atmosphère, soit à une source d'air comprimé, tandis que dans le ces des figures 3, 4, 6 et 8, cette chambre 2c est reliée en permanence à l'atmosphère. La chambre inférieure 2d est raccordée soit en permanence à l'atmosphère à travers au moins un orifice transversal 2b du tube 2, l'espace annulaire 9 et le passage non étanche du tube 2 dans le paroi supérieure 3a de l'enceinte 3 (voir figure 2a), soit alternativement à travers un orifice de raccordement 2e et une soupape de commande non représentée, soit à l'atmosphère, soit à une source d'air comprimé (figures 3, 4, 6 et 8). Dans le cas de la variante représentée sur la figure 2a, la chambre inférieure 2d est prolongée vers le bas à l'intérieur du premier tube de commande 2 jusqu'à un deuxième épaulement annulaire interne 2i qui sert d'appui à l'extrémité inférieure d'un ressort de rappel 18 entourant ici le partie supérieure du deuxième tube de commande 35, et à son extrémité supérieure, prenant appui sur le piston de commande 36 dudit deuxième tube 35. Dans ce cas, le ressort de rappel 18 agit par l'intermédiaire du deuxième tube 35 dans le sens de l'ouverture de la soupape d'admission 32 et toujours à l'encontre de la pression qui peut s'établir dans la chambre supérieure 2c et qui conduit à la fermeture de ladite soupape 32. Cette disposition est particulièrement avantageuse lorsque l'on désire obtenir une fermeture rapide, quasiment instantanée de la soupape d'admission 32. Selon les modes de réalisation représentés aux figures 3, 4, 6 et 8, le ressort de rappel 18 est disposé dans le chambre supérieure 2c et en s'appuyant, d'une part, contrôle piston du vérin 34 et, d'autre part, contre la paroi supérieure du premier tube de commande 2, sollicite le clapet d'admission 32a en permanence contre son siège 32b, c'est-à-dire en direction de la fermeture de le soupape d'admission 32 en l'absence d'une pression d'air établie dans le chambre inférieure 2d. Le partie extrême inférieure 35a du deuxième tube de commande 35, partie extrême 35a dépassant de l'extrémité inférieure du premier tube de commande 2, est entourée par un deuxième soufflet 38 dont la structure est identique ou similaire à celle du soufflet 6 de l'exemple décrit en référence à la figure 1 et dont chaque pli annulaire comporte également une rondelle de rigidification 8 susceptible de coulisser le long du deuxième tube de commande 35. L'extrémité supérieure 38a du deuxième soufflet 38 est fixée de façon étanche sur l'extrémité inférieure du premier tube de commande 2 ou un élément solidaire de celui-ci en dessous de la bride 29 et du premier soufflet 6, et l'extrémité inférieure 38b dudit deuxième soufflet 38 est fixée de façon étanche soit sur l'extrémité inférieure dudit deuxième tube de commande 38, soit sur le clapet d'admission 32a solidaire dudit deuxième tube 35. De cette façon, l'extrémité inférieure du premier tube de commande 2 est obturée de façon étanche par rapport à l'intérieur de l'enceinte 3. L'espace annulaire 39 entre la partie extrême inférieure 35a du deuxième tube de commande 35 et le deuxième soufflet 38 est relié en permanence à l'atmosphère extérieure, par exemple dans le ces des modes de réalisation des figures 3, 4, 6 et 8, à l'aide de plusieurs passages ménagés sous forme de fentes courtes ou d'orifices circulaires 35b dans la partie extrême inférieure 35a du deuxième tube 35 et dans le tronçon de tube 35c restant à l'intérieur de l'espace 2g du premier tube 2 en dessous de la cloison annulaire transversale 37, cet espace 2g étant relié à l'atmosphère à travers un ou plusieurs orifices 2b ménagés dans le paroi du premier tube 2 juste en dessous de ladite cloison 37. En outre, la chambre supérieure 2c communique à travers un orifice central du piston 36 avec l'intérieur du deuxième tube de commande 35 et de ce fait avec l'atmosphère extérieure. Comme mentionné précédemment, la chambre inférieure 2d de la partie extrême supérieure du premier tube de commande 2 peut être reliée alternativement à une source d'air comprimé ou à l'atmosphère extérieure à travers un orifice de raccordement 2e prévu dans la paroi dudit tube 2 juste au dessus de le cloison transversale 37. Il convient aussi de noter que le deuxième tube de commande 12 de l'exemple de la figure 1 remplit le même fonction ou une fonction similaire à celle du deuxième tube 35 des figures 2a, 2b, 3, 4 et 8.

Grâce aux particularités qui viennent d'être décrites, les mouvements alternatifs du piston-doseur 28 s'effectuent sans produire des dépressions ou surpressions notables dans le chambre de dosage 26, le clapet d'admission 32a agissent automatiquement en tant que clapet d'échappement si pour une raison ou une autre la pression de refoulement appliquée à la quantité dosée du produit par le piston-doseur 28 dépasse une valeur prédéterminée. En outre, comme la fermeture de la soupape d'admission est effectuée au moyen du deuxième tube de commande 35 en fin de course ascendante ou d'aspiration et avant le début de la course descendante ou de refoulement, le dosage du produit est fait avec une très grande précision. Par ailleurs, l'alimentation du produit sous une certaine pression assure le remplissage complet de la chambre de dosage 26 avec le produit sans apparition d'une dépression notable lors de le course ascendante du piston-doseur 28 à le soupape d'admission ouverte 32. La forme et la disposition particulière du joint d'étanchéité 33 contribuent largement à la précision du dosage du produit grâce à la très grande longévité sans fuite dudit dudit joint.

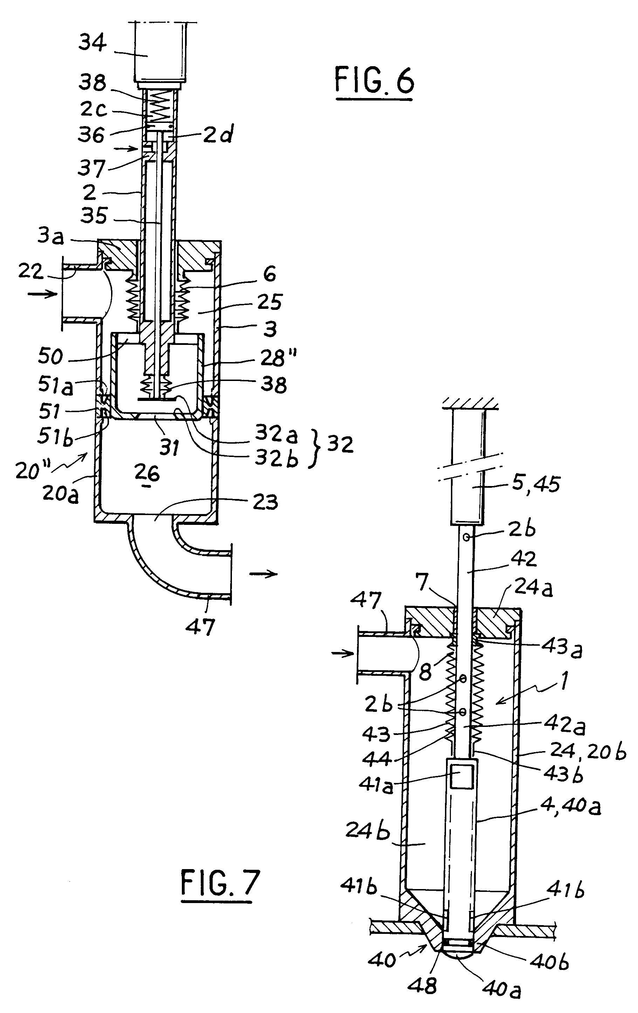

La deuxième enceinte 24 délimite une chambre de distribution 24b reliée à l'ouverture de sortie 23 de la chambre de dosage 26 et contient une soupape d'éjection 40 dont l'organe d'obturation 40a tel qu'un clapet (figures 3 et 8) ou une tige pleine d'obturation, ou une tubulure d'éjection obturée à ses deux extrémités et munie près de chaque extrémité d'une ouverture latérale 41a, 41b (figure 7) est porté par l'extrémité fermée inférieure (voir figures 3 et 7) ou supérieure (voir figure 8) d'un troisième tube de commande 42 qui est de structure similaire à celle du premier tube de commande 2. Le tronçon 42a du troisième tube de commande 42, tronçon 42a pénétrant dans la chambre de distribution ou autre chambre de transfert 24b de la deuxième enceinte 24, est entouré d'un troisième soufflet 43 dont une extrémité 43a est fixée sur la paroi d'enceinte 24a traversée par le troisième tube de commande 42 et dont l'autre extrémité 43b est fixée de façon étanche sur l'organe d'obturation 40a ou sur le troisième tube 42 plus ou moins près de l'organe d'obturation 40a en fonction de le course d'ouverture de ce dernier et de le longueur du tronçon du troisième tube 42, tronçon pénétrant dans l'enceinte 24. Là encore, chaque pli de soufflet est associé à une rondelle de rigidification 8 disposée à l'intérieur du troisième soufflet 43 et entourant ledit troisième tube 42 de façon à pouvoir coulisser le long de celui-ci pendant les mouvements d'extension ou de compression dudit soufflet 43. L'espace annulaire 44 entre le troisième tube 42 et le soufflet 43 est relié en permanence à l'atmosphère extérieure de la manière précédemment décrite.

L'extrémité du troisième tube de commande 42, extrémité opposée à la soupape d'éjection 40 et située toujours à l'extérieur de la chambre de distribution 24b ou enceinte similaire, porte le piston de commande 45a d'un vérin à simple effet 45 dont le ressort de rappel 45b agit sur ledit piston 45a et ainsi sur le troisième tube de commande 42 dans le sens, soit de la fermeture de la soupape d'éjection 40 (exemples représentés dans les figures 3 et 8), soit dans le sens de l'ouverture de celle-ci (exemple non représenté). Le piston 45a sépare le volume du vérin 45 en deux chambres 45c et 45d dont celle contenant le ressort 45b est raccordée en permanence à l'atmosphère et dont l'autre est susceptible d'être raccordée alternativement soit à l'atmosphère extérieure, soit à une source d'air comprimé non représentée. Il est à noter que le ressort de rappel 45b, au lieu d'être disposé dans le chambre supérieure 45c du vérin 45 tel que représenté sur la figure 3 pourrait aussi être disposé dans la chambre inférieure 45d, ou plus généralement dit dans la chambre traversée par le troisième tube de commande 42 et pourrait entourer ce dernier. Comme dans ce cas, la chambre contenant le ressort 45b est à l'atmosphère, l'espace annulaire 44 entre ce tube 42 et le troisième soufflet 43 peut directement communiquer avec ladite chambre. Dans ce cas, la fermeture rapide de la soupape 40 sera commandée par le pression d'air comprimé s'établissant dans l'autre chambre (ici chambre supérieure 45c) à l'en contre de la pression du ressort 45b.

Le siège 40b de la soupape d'éjection 40 est constitué, dans l'exemple de le figure 3, par l'extrémité supérieure d'une ou de plusieurs tubulures fixes d'éjection 46 débouchant dans la chambre de distribution 24b, le clapet 40a de ladite soupape 40 s'ouvrant en direction opposée à la direction d'écoulement du produit à travers la ou les tubulures d'éjection 46.

Lorsque l'organe d'obturation 40a de la soupape d'éjection 40 est une tige pleine ou un tronçon de tube obturé aux deux extrémités, le siège de la soupape 40 est constitué, comme dans l'exemple de la figure 7, par une buse fixe 40b prévue à l'extrémité inférieure de la chambre de distribution 24b. Dans ce cas, la soupape d'éjection 40 est fermée lorsque l'extrémité inférieure de le tige 40a pénètre de façon étanche dans l'espace cylindrique de le buse fixe 40b, et elle est ouverte lorsque l'extrémité inférieure de ladite tige 40a est retirée vers l'intérieur de le chambre de distribution 24b de façon à libérer l'espace cylindrique de passage de la buse fixe 40b.

La partie de distribution 20b du doseur-distributeur 20, partie 20b telle que représentée sur la figure 3 et raccordée par une conduite de liaison 47 à la sortie 23 de la chambre de dosage 26 de la partie de dosage 20a, peut être remplacée avantageusement par la variante représentée sur le figure 7, notamment lorsqu'il faut introduire le produit dans un récipient près du fond de celui-ci. Dans ce cas, comme précédemment indiqué, l'organe d'obturation 40a de la soupape d'éjection 40 est constitué par une tubulure d'éjection axialement mobile, obturée aux deux extrémités et comportant, près de chaque extrémité, au moins une ouverture latérale 41a, 41b. Le siège de soupape 40b est alors constitué par une buse de guidage cylindrique prévue dans la paroi de fond de la chambre de distribution 24b. En position haute de la tubulure d'éjection 40a, son extrémité inférieure munie d'un joint annulaire d'étanchéité 48 se situe à l'intérieur de la buse de guidage 40b et l'ouverture latérale inférieure 41b de la tubulure mobile d'éjection 40a se trouve alors près du fond de la chambre de distribution 24b et, le cas échéant au moins partiellement à l'intérieur de celle-ci. En position basse de la tubulure d'éjection 40a, son ouverture latérale inférieure 41b se trouve à l'extérieur de la chambre de distribution 24b et son ouverture latérale supérieure se situe à l'intérieur de cette chambre 24b près du fond de celle-ci.

Selon la variante de la figure 7, la tubulure d'éjection 40a dont l'extrémité supérieure est fixée à l'extrémité inférieure du troisième tube de commande 42, présente, lorsque la soupape d'éjection 40 est fermée, à l'intérieur de la chambre de distribution 24b, une longueur sensiblement égale à le longueur du tronçon 42a du troisième tube de commande 42, tronçon 42a pénètrent dans le chambre de distribution 24b, et le diamètre extérieur du troisième soufflet 43 entourant ledit tronçon de tube 42a est légèrement supérieur à celui de le tubulure d'éjection 40a de sorte que la diminution du volume occupé par ladite tubulure d'éjection 40a à l'intérieur de la chambre de distribution 24b soit compensée par l'augmentation du volume occupé par le troisième soufflet 43 à l'intérieur de ladite chambre 24b.

Le structure du doseur-distributeur 20' tel que représenté sur la figure 8 est identique à celle du doseur-distributeur 20 de la figure 3 en ce qui concerne la partie de dosage, mais en diffère en ce qui concerne la partie de distribution 20b. La chambre d'alimentation 25 du doseur-distributeur 20' est raccordée en permanence à la conduite 22' et à travers celle-ci à un deuxième réservoir de stockage contenant un produit, de préférence différent de celui contenu dans le premier réservoir de stockage associé au doseur-distributeur 20 des figures 2a, 2b et 3.

Le partie de distribution 20b du doseur-distributeur 20' de le figure 8 comprend en tant que deuxième enceinte 24 ou chambre de distribution 24b un tronçon transversal de conduite 49 qui est disposé horizontalement en dessous de le chambre de dosage 26 et perpendiculairement à l'axe de la chambre de dosage 26 et est susceptible d'être reliée à cette dernière à travers la soupape d'éjection 40 dont le siège 40b est constitué par une buse fixe prévue dans le paroi de fond de ladite chambre de dosage 26 et dont le clapet 40a disposé dans ladite chambre de distribution 24b s'ouvre en direction de l'écoulement du produit à travers ladite buse fixe 40b. Ce tronçon transversal de conduite 49 peut être raccordé, en outre, à une de ses extrémités, à un réservoir de stockage ou le sortie d'un poste doseur (figures 2a, 2b par exemple) et, à l'autre extrémité, à un poste de distribution de produit 20b ou à l'entrée de la chambre d'alimentation 25 d'un doseur-distributeur 20 par exemple conforme à celui représenté sur le figure 3. Dans le ces du doseur-distributeur 20' de la figure 8, la soupape d'admission 32 et la soupape d'éjection 40 de même que les trois tubes de commande 2, 35 et 42 sont alignés suivant un même axe vertical qui constitue en même temps l'axe vertical de la partie de dosage 20a et de le partie de distribution 20b du doseur-distributeur 20'.

Le mode de réalisation de le partie de dosage 20a du doseur-distributeur 20" représenté partiellement sur la figure 6 diffère de l'exemple de la partie de dosage 20a du doseur-distributeur 20 selon la figure 3 seulement du fait que selon la figure 6 le piston doseur 28" présente la forme d'un pot cylindrique qui est ouvert vers le haut en direction de la chambre d'alimentation 25, dont le bord supérieur est fixé à l'aide de plusieurs bras radiaux 50 à le partie extrême inférieure du premier tube de commande 2, dont le fond comporte le passage central 31 et le siège 32b pour le clapet 32a de la soupape d'admission 32 et dont la paroi latérale est guidée de façon étanche par un joint annulaire d'étanchéité 51 fixé à le paroi cylindrique de le première enceinte 3 à l'extrémité supérieure de la chambre de dosage 26 et du fait que le clapet 32a de la soupape d'admission 32 et le deuxième soufflet 38 entourant la partie inférieure du deuxième tube de commande 35 sont disposés à l'intérieur dudit piston-doseur 28". Selon une différence supplémentaire par rapport à l'exemple de le figure 3, le joint annulaire d'étanchéité 51 comporte deux gorges annulaires verticalement superposées 51a et 51b dont l'une (51a) est ouverte vers le chambre d'alimentation 25 et l'autre (51b) vers la chambre de dosage 26. Tous les autres éléments, dispositions ou configurations de le partie de dosage 20a du doseur-distributeur 20″ sont identiques ou similaires à ceux de la partie de dosage 20a du doseur-distributeur 20 de la figure 3 et portent en conséquence les mêmes références et ne seront pas décrits en détail.

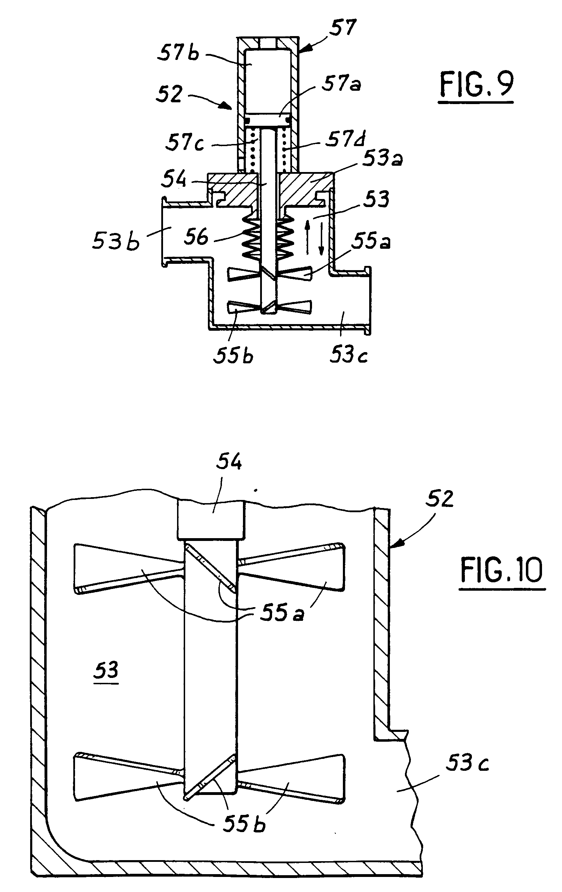

Comme on peut le voir sur le côté droit de la figure 8 et les figures 9 et 10, l'ensemble intermédiaire 1 de la figure 1 peut également trouver son application dans le cadre d'un mélangeur de produits 52. Ce mélangeur 52 est en partie disposé dans une chambre de mélange 53 ou une partie élargie d'une conduite d'alimentation et comporte à l'extrémité libre, de préférence à l'extrémité inférieure fermée d'un quatrième tube vertical de commande 54 axialement mobile au moins une paire d'ailettes mélangeuses 55 (figure 8). Selon l'exemple des figures 9 et 10, on prévoit sur la partie extrême inférieure du quatrième tube de commande 54 deux jeux de quatre ailettes mélangeuses 55a et 55b verticalement superposéesà une distance prédéterminée, les quatre ailettes de chaque jeu d'ailettes étant disposées en croix et présentent pour un jeu d'ailettes un pas à droite et pour l'autre, un pas à gauche. De le même manière comme précédemment décrit, en référence au troisième tube de commande 35 de l'exemple de le figure 3, le quatrième tube de commande 54 est entouré d'un quatrième soufflet 56 sur sa partie pénétrant dans la chambre de mélange 53 et située au-dessus des ailettes mélangeuses 55 ou 55a et 55b, l'extrémité inférieure dudit soufflet 56 étant fixée de façon étanche sur le quatrième tube 54 et l'extrémité supérieure dudit soufflet 56 étant fixée de façon étanche sur la paroi supérieure 53a de le chambre de mélange 53, paroi 53a à travers de laquelle passe ledit tube 54. L'extrémité supérieure du quatrième tube 54 porte le piston de commande 57a d'un vérin 57 dont l'intérieur est subdivisé par ledit piston 57a en deux chambres 57b et 57c dont l'une (57b) est susceptible d'être raccordée alternativement à une source d'air comprimé et à l'atmosphère et dont l'autre (57c) contient un ressort de rappel 57d agissant à l'encontre de le force résultante exercée par l'air comprimé sur le piston 57a de sorte que les ailettes 55 ou 55a et 57b soient animées alternativement de mouvements ascendant et descendant. L'entrée supérieure 53b de la chambre de mélange 53 est raccordée par l'intermédiaire du tronçon de conduite 49 à un premier réservoir de stockage d'un produit sous pression et à travers ledit tronçon 49 et la soupape d'éjection 40 à la partie de dosage 20a d'un doseur-distributeur 20′ (voir figure 8) qui reçoit dans sa chambre d'alimentation 25 un autre produit sous pression refoulé en quantité dosée dans le tronçon de conduite 49 à travers la soupape d'éjection 40 dudit doseur-distributeur 20′. Le sortie inférieure 53c de le chambre de mélange 53 est raccordée à l'entrée supérieure 21 d'une chambre d'alimentation d'un autre (premier) doseur-distributeur 20 (voir figures 2a, 2b, 3 à 5) ou 20″ (voir figure 6).

Il est à noter que la structure du quatrième tube de commande 54 et du quatrième soufflet 56 est similaire à celle du deuxième tube de commande 35 et du deuxième soufflet 38 de sorte qu'il n'est pas nécessaire de les décrire plus en détail.

Lorsqu'on utilise deux doseurs-distributeurs suivant un montage en série, il est avantageux d'utiliser comme doseur-distributeur amont celui (20′) représenté sur la figure 8 et comme doseur-distributeur aval celui (20) représenté sur les figures 3 à 5 ou celui (20″) représenté sur la figure 6.

Dans certains cas, il est avantageux d'interposer entre le sortie du doseur-distributeur amont 20′ (figure 8) et l'entrée du doseur-distributeur aval 20 ou 20″ un mélangeur 52 du type représenté sur le figure 8 ou sur les figures 9 et 10.

L'invention peut subir un certain nombre de modifications à le portée de l'homme de métier sans que l'on sorte pour cela du cadre de protection défini par les revendications annexées.

## Revendications

1. Doseur-distributeur (20, 20′, 20″) d'au moins un produit pâteux et/ou liquide contenu sous pression dans eu moins un premier réservoir de stockage, doseur-distributeur du type comportant dans une première enceinte cylindrique (3) d'une part, une chambre supérieure d'alimentation (25) raccordée par une conduite d'alimentation (22, 22′) audit premier réservoir, et, d'autre part, une chambre inférieure de dosage (26) séparée de ladite chambre d'alimentation (25) par un piston-doseur (28) fixé à l'extrémité inférieure d'un organe de commande (2) pénétrant dans ladite première enceinte (3) et coulissant de façon étanche dans ladite première enceinte (3) et muni d'un passage central (31) obturable par une soupape d'admission (32) dont l'organe d'obturation (32a) sollicité par un ressort de rappel (18), est guidé par rapport audit piston (28) et coopère avec un siège de soupape (32b) entourent ledit passage central (31), une chambre de distribution (24b) prévue en aval de la chambre de dosage (26), ainsi qu'une soupape d'éjection (40) dont l'organe d'obturation (40a), chargé par un ressort (45b), est disposé dans ladite chambre de distribution (24b),
caractérisé en ce que l'organe de commande du piston doseur (28, 28″) est constitué par un premier tube de commande (2), dont l'extrémité voisine de la soupape d'admission (32) est obturée de façon étanche, que l'organe d'obturation, tel qu'un clapet (32a) de le soupape d'admission (32) est situé du côté de la chambre d'alimentation (25) et est porté par l'extrémité fermée inférieure d'un deuxième tube de commande (35) guidé dans le premier tube (2) et dépassent de l'extrémité inférieure de celui-ci, que sur son tronçon (2a, 35a) pénétrant dans l'enceinte (3), chaque tube de commande (2, 35) est entouré d'un soufflet (6, 38), que l'espace annulaire (9) existant entre le tronçon (2a) du premier tube de commande (2), tronçon (2a) pénétrant dans l'enceinte (3) et le premier soufflet (6) est raccordée en permanence à l'atmosphère extérieure, que l'extrémité supérieure (6a) du premier soufflet (6) entourent le premier tube de commande (2) est fixée de façon étanche sur la paroi d'enceinte (3a) traversée par ledit premier tube (2) et l'extrémité inférieure (6b) du premier soufflet (6) est fixée de façon étanche sur la partie extrême inférieure dudit premier tube (2), que l'extrémité supérieure (38a) du deuxième soufflet (38) entourent le deuxième tube de commande (35) sur son tronçon (35a) dépassant de l'extrémité inférieure du premier tube de commande (2) est fixée de façon étanche sur l'extrémité inférieure du premier tube (2) en dessous du premier soufflet (6) tandis que l'extrémité inférieure (38b) du deuxième soufflet (38) est fixée de façon étanche sur l'extrémité inférieure du deuxième tube (35) ou sur le clapet d'admission (32a) solidaire dudit deuxième tube (35), et que la partie extrême supérieure du deuxième tube de commande (35) est guidée de façon étanche dans le premier tube (2) et présente à son extrémité supérieure un piston de commande (36) qui sépare le volume du premier tube (2) en deux chambres (2c, 2d) dont l'une est à l'atmosphère et comporte le ressort de rappel (18) agissant sur le clapet d'admission (32a) et dont l'autre est susceptible d'être raccordée alternativement à une source d'air comprimé ou à l'atmosphère, la pression d'air comprimé établie dans ladite autre chambre agissant sur ledit clapet d'adm ission (32a) dans le sens opposé à celui du ressort de rappel (18).

2. Doseur-distributeur selon la revendication 1, caractérisé en ce que l'organe d'obturation (40a) de la soupape d'éjection (40) est porté par l'extrémité fermée d'un troisième tube de commande (42) qui, sur son tronçon (42a), pénétrant dans la chambre de distribution (24b) de l'enceinte (24) est entouré d'un troisième soufflet (43) dont les extrémités sont fixées de façon étanche, d'une part, du côté de l'organe d'obturation (40a) de la soupape d'éjection (40), sur ledit troisième tube (42) et, d'autre part, sur la paroi d'enceinte (24a) traversée par ledit troisième tube de commande (42) dont l'autre extrémité porte, à l'extérieur de ladite enceinte (24) traversée par le produit, un piston de commande (45a) d'un vérin (45) comportant deux chambres (45c, 45d) dont l'une (45d) est susceptible d'être raccordée alternativement à l'atmosphère extérieure ou à une source d'air comprimé et dont l'autre (45c) est muni d'un ressort de rappel (45b) agissant sur ledit piston (45a) et l'organe d'obturation (40a) à l'encontre de la pression d'air établie dans la chambre (45d) dans le sens de l'ouverture ou de fermeture de la soupape d'éjection (40).

3. Doseur-distributeur selon l'une des revendications 1 et 2, caractérisé en ce que chaque pli annulaire (6d) de chaque soufflet (6, 38, 43) est associé à une rondelle de rigidification (8) disposée dans ledit soufflet (6, 38, 43) et susceptible de coulisser le long du tube de commande correspondant (2, 35, 42) et que l'espace annulaire (9) entre chaque soufflet (6, 38, 43) et le tube correspondant (2, 35, 42) communique en permanence avec l'atmosphère extérieure.

4. Doseur-distributeur selon l'une des revendications 1 à 3, caractérisé en ce que la partie supérieure du premier tube de commande (2) est conçue en tant que vérin de commande (2c, 2d, 36) dont le piston de commande (36) solidaire de l'extrémité supérieure du deuxième tube de commande (35) sépare ladite partie supérieure en une chambre supérieure (2c) située en permanence à l'extérieur de la première enceinte (3), et en une chambre inférieure (2d) prévue dans un tronçon du premier tube (2), tronçon susceptible de pénétrer dans l'enceinte (3) lors du mouvement descendant du piston-doseur (28), que la chambre supérieure (2c) est susceptible d'être raccordée alternativement à une source d'air comprimé ou à l'atmosphère, tandis que la chambre inférieure (2d) est munie du ressort de rappel (18) qui entoure la partie supérieure du deuxième tube de commande (35) et en prenant appui, d'une part, contre un épaulement intérieur (2i) du premier tube (2) et, d'autre part, la face inférieure du piston de commande (36), agit dans le sens de l'ouverture de la soupape d'admission (32) à l'encontre de la pression d'air comprimé établie périodiquement dans la chambre supérieure (2c).

5. Doseur-distributeur selon la revendication 1, caractérisé en ce que le premier tube de commande (2) comporte plusieurs passages (2b) reliant l'intérieur du tube (2), d'une part, à l'espace annulaire (9) existant entre le tronçon de tube (2a) et le soufflet (6), et, d'autre part, à l'atmosphère extérieure.

6. Doseur-distributeur selon l'une des revendications 3 à 5, caractérisé en ce que chaque extrémité (6a, 6b) d'au moins un soufflet (6) comporte un demi-pli (6e, 6f) associé à un épaulement d'appui (10a, 10b) dont le face en regard du soufflet (6) est perpendiculaire à l'axe du tube de commande (2) et parellèle aux rondelles de rigidification (8), que l'épaulement d'appui (10a) situé eu niveau de la paroi d'enceinte supérieure (3a) est prévu sur ladite paroi (3a) traversée par le tube de commande (2), en ce que l'épaulement d'appui (10b) situé du côté de l'élément de manoeuvre (4)tel qu'un piston-doseur (28) est solidaire dudit tube (2), et en ce qu'en position compactée du soufflet (6), chaque pli (6d) de ce dernier (6) est appliqué, d'une part, contre un pli voisin et, d'autre part, contre la rondelle de rigidification (8) coiffée par ledit pli et chaque demi-pli extrême (6e, 6f) porte contre l'épaulement d'appui correspondant (10a ou 10b).

7. Doseur-distributeur selon l'une des revendications 1 à 6, caractérisé en ce qu'au moins un soufflet (6) comporte à chaque extrémité (6a, 6b) un bourrelet profilé de fixation (6g) auquel se raccorde un demi-pli extrême correspondant (6e ou 6f) du soufflet (6), les gorges et nervures annulaires dudit bourrelet profilé (6g) coopérant avec un logement de retenue de forme correspondante et prévu, soit sur l'épaulement d'appui (10a, 10b), soit sur le paroi l'enceinte (3a), soit sur l'extrémité du tube de commande (2), extrémité portant l'élément de manoeuvre (4), tel qu'un piston-doseur (28).

8. Doseur-distributeur selon l'une des revendications 1 à 7, caractérisé en ce que l'espace annulaire (9) entre le soufflet (6, 38, 43) et le tube de commande (2, 35, 42) est relié à l'atmosphère extérieure à travers plusieurs passages (2b, 35b) ménagés dans le tronçon de tube situé en face du soufflet (6, 38, 43), ainsi qu'à travers au moins un orifice (2b) prévu dans ledit tube dans la partie située en permanence à l'extérieur de l'enceinte (24).

9. Doseur-distributeur selon la revendication 1, caractérisé en ce que la sortie (23) de la chambre de dosage (26) est reliée à une enceinte dite chambre de distribution (24b) par une conduite de liaison (47) dont une extrémité est raccordée directement à le sortie de la chambre de dosage (26) et dont l'autre extrémité débouche dans la chambre de distribution (24b) dans laquelle est disposée la soupape d'éjection (40), et que le piston de commande (45a) de l'organe d'obturation (40a) de ladite soupape (40) est disposé dans une chambre de vérin (45d) susceptible d'être raccordée à une source d'air comprimé agissant sur ledit piston (45a) dans le sens de l'ouverture ou de la fermeture de la soupape d'éjection (40) et à l'encontre du ressort de rappel (45b) portant contre ledit piston.

10. Doseur-distributeur selon l'une des revendications 1 à 9, caractérisé en ce que la chambre de dosage (26) est susceptible d'être reliée à la chambre de distribution (24b) à travers le soupape d'éjection (40) dont le siège est constitué par une buse fixe prévue dans la paroi de fond de ladite chambre de dosage (26), que la chambre de distribution (24b) est constituée par un tronçon transversel de conduite (49) disposé horizontalement en dessous de la chambre de dosage (26) et perpendiculairement à l'axe de celle-ci et en ce que le clapet (40a) de le soupape d'éjection (40) disposé dans la chambre de distribution (24b) s'ouvre en direction de l'écoulement du produit à travers ladite buse fixe (40b).

11. Doseur-distributeur selon l'une quelconque des revendications 1 à 9, caractérisé en ce que l'organe d'obturation de la soupape d'éjection (40) est un clapet (40a) dont le siège (40b) est constitué par l'extrémité supérieure d'au moins une tubulure fixe d'éjection (46) débouchent dans la chambre de distribution (24b), et que ledit clapet (40a) ouvre ladite soupape d'éjection (40) en se déplaçant en direction opposée à la direction d'écoulement du produit à travers le tubulure d'éjection (46).

12. Doseur-distributeur selon l'une des revendications 1 à 9, caractérisé en ce que l'organe d'obturation de la soupape d'éjection (40) est constitué par une tige pleine d'obturation (40a) et le siège de ladite soupape est constitué par une buse fixe d'éjection (40b) prévue à l'extrémité inférieure de la chambre de distribution (24b) dans laquelle pénètre de façon étanche l'extrémité inférieure de ladite tige pleine (40a) dont l'extrémité supérieure est solidaire de l'extrémité inférieure du troisième tube de commande (42).

13. Doseur-distributeur selon l'une des revendications 1 à 9, caractérisé en ce que l'organe d'obturation de la soupape d'éjection (40) est constitué par une tubulure d'éjection (40a) axialement mobile, obturée eux deux extrémités et comportent près de chaque extrémité au moins une ouverture latérale (41a, 41b), que le siège de ladite soupape est constitué par une buse de guidage cylindrique (40b) prévue dans la paroi de fond de la chambre de distribution (24b) et dans laquelle est guidée le tubulure d'éjection dont l'ouverture latérale inférieure (41b) se situe à l'intérieur de la buse de guidage cylindrique (40b) en position fermée de la soupape d'éjection (40), en ce que l'extrémité supérieure de la tubulure d'éjection (40a) est fixée sur l'extrémité inférieure du troisième tube de commande (42) disposé coaxialement à ladite tubulure d'éjection (40a) et en ce qu'en position fermée de la soupape d'éjection (40), le longueur du tronçon (42a) du troisième tube de commande (42), tronçon pénétrant dans la chambre de distribution (24b), est sensiblement égale à le longueur de le tubulure d'éjection (40a) à l'intérieur de ladite chambre de distribution (24b) et le diamètre extérieur du troisième soufflet (43) entourant ledit troisième tube (42) est légèrement supérieur à celui de ladite tubulure d'éjection (40a) de sorte que lors de l'abaissement de la tubulure d'éjection (40a), la diminution du volume occupé par la dite tubulure d'éjection (40a) dans ladite chambre de distribution (24b) soit compensée par l'augmentation du volume occupé par ledit soufflet (43) à l'intérieur de ladite chambre de distribution (24b).

14. Doseur-distributeur selon l'une des revendications 1 à 13, caractérisé en ce que le passage central (31) du piston doseur (28, 28") présente une forme tronconique qui s'élargit à partir de la chambre d'alimentation (25) vers le chambre de dosage (26).

15. Doseur-distributeur selon l'une des revendications 1 à 14, caractérisé en ce que le piston doseur (28) comporte sur son pourtour un joint annulaire d'étanchéité (33) à deux lèvres (33a, 33b) qui délimitent une gorge annulaire (33c) ouverte en direction de la chambre d'alimentation (25).

16. Doseur-distributeur selon l'une des revendications 1 à 15, caractérisé en ce que le piston-doseur (28) est fixé à l'extrémité inférieure du premier tube de commande (2) par l'intermédiaire d'une bride transversale (29) solidaire dudit tube (2) et de plusieurs tiges d'écartement (30) parallèles audit tube (2) et fixées à la périphérie de la bride (29) et sur ledit piston doseur (28) entre le passage central (31) et le joint d'étanchéité (33) de celui-ci et en ce que le soufflet (38) du deuxième tube de commande (35) est situé dans l'espace compris entre le piston doseur (28) et la bride transversale (29).

17. Doseur-distributeur selon l'une des revendications 1 à 15, caractérisé en ce que le piston-doseur (28") présente la forme d'un pot cylindrique qui est ouvert vers le haut en direction de la chambre d'alimentation (25), dont le bord supérieur est fixé à l'aide de plusieurs bras radiaux (50), à la partie extrême inférieure du premier tube de commande (2), dont le fond comporte le passage central (31) et le siège (32b) de la soupape d'admission (32) et dont le paroi latérale est guidée de façon étanche par un joint annulaire d'étanchéité (51) fixé à la paroi de le première enceinte (3) à l'extrémité supérieure de la chambre de dosage (26) et en ce que le clapet (32a) de le soupape d'admission (32) et le soufflet (38) du deuxième tube de commande (35) sont disposés à l'intérieur du pot cylindrique dudit piston doseur (28").

18. Doseur-distributeur selon le revendication 17, caractérisé en ce que le joint annulaire d'étanchéité (51) comporte deux gorges annulaires superposées (51a, 51b) dont l'une est ouverte vers la chambre d'alimentation (25) et l'autre vers la chambre de dosage (26).

19. Doseur-distributeur selon l'une des revendications 1 à 18, caractérisé en ce qu'un deuxième doseur-distributeur (20') d'un deuxième produit pâteux et/ou liquide contenu dans un deuxième réservoir de stockage est associé au premier doseur-distributeur (20 ou 20") et prévu en amont de ce dernier, que ce deuxième doseur-distributeur (20') comporte dans une deuxième enceinte cylindrique (3) un deuxième piston doseur (28) muni d'un passage central (31) obturable par une deuxième soupape d'admission (32), et séparant ladite deuxième enceinte (3) d'une part, en une deuxième chambre supérieure d'alimentation (25) raccordée par une deuxième conduite d'alimentation (22') à un deuxième réservoir de produit, et, d'autre part, en une deuxième chambre inférieure de dosage (26) dont le fond débouche à travers une deuxième soupape d'éjection (40) dans la conduite d'alimentation (22, 49) du premier doseur-distributeur (20 ou 20'), et en ce que la deuxième soupape d'éjection (40) comporte un siège (40b) entourent l'ouverture de sortie ménagée dans le fond de la chambre de dosage (26) ainsi qu'un clapet (40a) prévu en dessous de ladite chambre de dosage (26) dans la conduite d'alimentation (22, 49) du premier doseur-distributeur (20, 20") et porté par l'extrémité supérieure du troisième tube de commande (42) dont la partie pénétrant dans ladite conduite d'alimentation (22, 49) est entouré par un soufflet (43) et dont l'extrémité inférieure située à l'extérieur de ladite conduite d'alimentation (39) coopère avec un vérin (45) sollicitant ledit clapet (40a) contre son siège (40b) dans le sens contraire à celui du produit expulsé de le deuxième chambre de dosage (25).

20. Doseur-distributeur selon la revendication 19, caractérisé en ce qu'un mélangeur de produits (52) est interposé dans le conduite d'alimentation (22, 49) entre le sortie de le deuxième chambre de dosage (26) du deuxième doseur-distributeur amont (20') et l'entrée (21) dans la chambre d'alimentation (25) du premier doseur-distributeur aval (20, 20") et que ce mélangeur (52) comporte au moins une paire d'ailettes mélangeuses (55, 55a, 55b) prévue à la partie inférieure d'un quatrième tube de commande (54) axialement mobile dans une chambre de mélange (53) dont l'entrée supérieure (53b) est raccordée à la chambre de dosage (26) du deuxième doseur-distributeur amont (20') et à la sortie du premier réservoir de stockage et dont la sortie inférieure (53c) est raccordée à l'entrée (21) de la chambre d'alimentation (25) du premier doseur-distributeur aval (20, 20"), et en ce qu'un soufflet (56) entoure le quatrième tube de commande (54) sur la partie pénétrant dans la chambre de mélange (53) à l'extérieur de laquelle ledit quatrième tube (54) porte un piston de commande (57a) coulissent de façon étanche dans un vérin (57) et séparant à l'intérieur de celui-ci une chambre (57b) susceptible d'être raccordée à une source d'air comprimé, d'une chambre (57c) contenant un ressort de rappel (57d).

21. Doseur-distributeur selon la revendication 20, caractérisé en ce que le mélangeur (52) comporte au moins deux paires superposées d'ailettes mélangeuses (55a, 55b) dont une première paire présente un pas à droite et dont l'autre paire présente un pas à gauche.

## Patentansprüche

1. Dosier- und Abgabevorrichtung (20, 20', 20") für mindestens einen unter Druck in mindestens einem ersten Lagertank stehenden pastösen und/oder flüssigen Stoff, wobei es sich bei dieser Dosier- und Abgabevorrichtung um einen Typ handelt, der in einem ersten zylindrischen Behälter (3) einerseits über eine oben liegende Aufgabekammer (25) verfügt, die über eine Zuführleitung (22, 22') an den besagten ersten Tank angeschlossen ist, und zum anderen über eine unten liegende Dosierkammer (26), die von der besagten Aufgabekammer (25) durch einen Dosierkolben (28) getrennt ist, der am unteren Ende einer Steuervorrichtung (2) befestigt ist, die in den besagten ersten Behälter (3) hineinreicht und unter guter Abdichtung verschiebbar innerhalb des besagten ersten Behälters (3) ist, außerdem über einen zentralen Durchlaß (31) verfügt, der mit einem Einlaßventil (32) geschlossen werden kann, dessen Schließvorrichtung (32a), die über eine Spannfeder (18) funktioniert, über den besagten Kolben (28) gesteuert wird und im Zusammenspiel mit einem Ventilsitz (32b), der um den zentralen Durchlaß (31) herum sitzt, einer der Dosierkammer (26) nachgeschalteten Abgabekammer (24b) sowie einem Auslaßventil (40) funktioniert, dessen mit einer Feder (45b) arbeitende Schließvorrichtung (40a) in besagter Abgabekammer (24b) vorgesehen ist,

dadurch gekennzeichnet, daß die Steuervorrichtung des Dosierkolbens (28, 28″) aus einer ersten Steuerröhre (2) besteht, deren dem Einlaßventil (32) nahegelegenes Ende dicht verschlossen ist, daß die Schließvorrichtung in beispielsweise der Form einer Klappe (32a) des Einlaßventils (32) auf der Seite der Aufgabekammer (25) liegt und vom geschlossenen unteren Ende einer zweiten Steuerröhre (35) gehalten wird, die in der ersten Steuerröhre (2) geführt wird und über das untere Ende derselben hinausgeht, daß jede Steuerröhre (2, 35) an ihrem in den Behälter (3) reichenden Endstück (2a, 35a) von einem Faltenbalg (6, 38) umgeben ist, daß der ringförmige Raum (9) zwischen dem Endstück (2a) der ersten Steuerröhre (2), das in den besagten Behälter (3) reicht, und dem ersten Faltenbalg (6) ständig mit der Atmosphäre verbunden ist, daß das obere Ende (6a) des ersten Faltenbalgs (6), das um die erste Steuerröhre (2) verläuft, dicht schließend an der Behälterwand (3a) befestigt ist, durch die die besagte erste Röhre (2) hindurchgeht, und das untere Ende (6b) des ersten Faltenbalgs (6) am unteren Teil der besagten ersten Röhre (2) dicht schließend befestigt ist, daß das obere Ende (38a) des zweiten Faltenbalgs (38), das um die zweite Steuerröhre (35) an ihrem über das untere Ende der ersten Steuerröhre (2) hinausreichenden Endstück (35a) herumführt, dicht schließend am unteren Ende der ersten Röhre (2) unter dem ersten Faltenbalg (6) befestigt ist, während das untere Ende (38b) des zweiten Faltenbalgs (38) dicht schließend am unteren Ende der zweiten Röhre (35) oder an der fest mit der zweiten Röhre (35) verbundenen Aufgabeklappe (32a) befestigt ist, und daß der obere Endbereich der zweiten Steuerröhre (35) dicht schließend in die erste Röhre (2) geführt wird und an seinem oberen Ende einen Steuerkolben (36) aufweist, der den Innenraum der ersten Röhre (2) in zwei Kammern (2c, 2d) teilt, deren eine an die Luft führt und die Spannfeder (18) für die Aufgabeklappe (32a) aufweist, und deren andere entweder an eine Druckluftquelle oder an die Luft angeschlossen werden kann, wobei der in der besagten anderen Kammer herrschende Luftdruck auf die besagte Aufgabeklappe (32a) in entgegengesetzter Richtung zur Richtung der Spannfeder (18) wirkt.

2. Dosier- und Abgabevorrichtung gemäß Anspruch 1, dadurch gekennzeichnet, daß die Schließvorrichtung (40a) des Auslaßventils (40) vom verschlossenen Ende einer dritten Steuerröhre (42) gehalten wird, die an ihrem in die Abgabekammer (24b) des Behälters (24) reichenden Endstück (42a) von einem dritten Faltenbalg (43) umgeben ist, dessen Enden dicht schließend zum einen auf der Seite der Schließvorrichtung (40a) des Auslaßventils (40) an der besagten dritten Röhre (42) und zum anderen an der Behälterwand (24a), durch die besagte dritte Steuerröhre (42) hindurchgeht, befestigt sind, deren anderes Ende außerhalb des besagten Behälters (24), durch den der Stoff geführt wird, einen Steuerkolben (45a) eines Zylinders (45) trägt, der aus zwei Kammern (45c, 45d) besteht, von denen die eine (45d) entweder an die Atmosphäre oder an eine Druckluftquelle angeschlossen werden kann und die andere (45c) mit einer auf den besagten Kolben (45a) und die Schließvorrichtung (40a) gegen den in der Kammer (45d) erzeugten Druck in Richtung der Öffnung oder Schließung des Auslaßventils (40) wirkenden Spannfeder (45b) ausgestattet ist.

3. Dosier- und Abgabevorrichtung gemäß einem der Ansprüche 1 und 2, dadurch gekennzeichnet, daß jeder ringförmige Falz (6d) jedes Faltenbalgs (6, 38, 43) mit einer im besagten Faltenbalg (6, 38, 43) angeordneten Versteifungsscheibe (8) verbunden ist und entlang der entsprechenden Steuerröhre (2, 35, 42) verschiebbar ist, und daß der ringförmige Raum (9) zwischen jedem Faltenbalg (6, 38, 43) und der entsprechenden Röhre (2, 35, 42) ständig mit der Außenatmosphäre verbunden ist.

4. Dosier- und Abgabevorrichtung gemäß einem der Ansprüche 1 bis 3, dadurch gekennzeichnet, daß der obere Bereich der ersten Steuerröhre (2) als Antriebszylinder (2c, 2d, 36) vorgesehen ist, dessen Steuerkolben (36) eine Einheit bildet mit dem oberen Ende der zweiten Steuerröhre (35) und besagten oberen Bereich in eine obere Kammer (2c), die ständig außerhalb des ersten Behälters (3) liegt, und eine untere Kammer (2d) teilt, die in einem Endstück der ersten Röhre (2), vorgesehen ist, das während der Abwärtsbewegung des Dosierkolbens (2a) in den Behälter (3) reichen kann, sowie dadurch, daß die obere Kammer (2c) entweder an eine Druckluftquelle angeschlossen werden kann oder direkt an die Atmosphäre führt, während die untere Kammer (2d) mit der Spannfeder (18) ausgestattet ist, die den oberen Teil der zweiten Steuerröhre (35) umgibt und zum einen durch einen inneren Vorsprung (2i) der ersten Röhre (2) und zum anderen durch die Innenseite des Steuerkolbens (36) begrenzt ist und dadurch in Richtung der Öffnung des Einlaßventils (32) entgegen dem regelmäßig in der oberen Kammer (2c) erzeugten Druck wirkt.

5. Dosier- und Abgabevorrichtung gemäß Anspruch 1, dadurch gekennzeichnet, daß die erste Steuerröhre (2) über mehrere Durchlässe (2b) verfügt, die das Innere der Röhre (2) zum einen mit dem ringförmigen Raum (9) zwischen dem Röhrenendstück (2a) und dem Faltenbalg (6) und zum anderen mit der Atmosphäre verbindet.

6. Dosier- und Abgabevorrichtung gemäß einem der Ansprüche 3 bis 5, dadurch gekennzeichnet, daß jedes Ende (6a, 6b) mindestens eines Faltenbalgs (6) über ein halbgefalztes Stück (6e, 6f) verfügt, das durch einen Auflagevorsprung (10a, 10b) begrenzt ist, dessen zum Faltenbalg (6) zeigende Seite senkrecht zur Achse der Steuerröhre (2) und parallel zu den Versteifungsscheiben (8) verläuft, daß der in Höhe der oberen Behälterwand (3a) vorgesehene Auflagevorsprung (10a) an der besagten Wand (3a) vorgesehen ist, durch die die Steuerröhre (2) hindurchgeht, sowie dadurch, daß der auf der Seite des Bedienungselements (4) wie beispielsweise eines Dosierkolbens (28) vorgesehene Auflagevorsprung (10b) eine Einheit bildet mit besagter Röhre (2), und daß in zusammengedrückter Position des Faltenbalgs (6) jeder Falz (6d) des Faltenbalgs (6) zum einen gegen den nächsten Falz und zum anderen gegen die von besagtem Falz bedeckte Versteifungsscheibe (8) gedrückt wird, und jeder äußere Halbfalz (6e, 6f) gegen den entsprechenden Auflagevorsprung (10a oder 10b) drückt.

7. Dosier- und Abgabevorrichtung gemäß einem der Ansprüche 1 bis 6, dadurch gekennzeichnet, daß mindestens ein Faltenbalg (6) an jedem Ende (6a, 6b) über ein profiliertes, dickeres Stück (6g) zur Befestigung verfügt, an das sich ein entsprechender Endhalbfalz (6e oder 6f) des Faltenbalgs (6) anschließt, wobei die Rillen und ringförmigen Rippen des besagten Profilstücks (6g) zu einem Rückhalteraum entsprechender Form einpassen, der entweder am Auflagevorsprung (10a, 10b), an der Behälterwand (3a) oder am Ende der Steuerröhre (2) vorgesehen ist, wobei das Ende das Bedienungselement (4) wie beispielsweise einen Dosierkolben (28) trägt.

8. Dosier- und Abgabevorrichtung gemäß einem der Ansprüche 1 bis 7, dadurch gekennzeichnet, daß der Raum (9) zwischen dem Faltenbalg (6, 38, 43) und der Steuerröhre (2, 35, 42) über mehrere Durchlässe (2b, 35b) direkt nach draußen in die Atmosphäre führt, wobei diese Durchlässe im gegenüber des Faltenbalgs (6, 38, 43) befindlichen Röhrenendstück vorgesehen sind, sowie durch mindestens einen Spalt (2b), der in dem Teil der besagten Röhre vorgesehen ist, der sich ständig außerhalb des Behälters (24) befindet.

9. Dosier- und Abgabevorrichtung gemäß Anspruch 1, dadurch gekennzeichnet, daß der Ausgang (23) der Dosierkammer (26) mit einem Abgabekammer (24b) genannten Behälter verbunden ist, und zwar über eine Verbindungsleitung (47), deren eines Ende direkt vom Ausgang der Dosierkammer (26) ausgeht, und deren anderes Ende in die Abgabekammer (24b) mündet, in der sich das Auslaßventil (40) befindet, und daß sich der Steuerkolben (45a) der Schließvorrichtung (40a) des besagten Ventils (40) in einer Zylinderkammer (45d) befindet, die an eine Druckluftquelle angeschlossen werden kann, die den besagten Kolben (45a) in Richtung der Öffnung oder Schließung des Auslaßventils (40) und entgegen der Spannfeder (45b), die gegen besagten Kolben wirkt, betätigt.

10. Dosier- und Abgabevorrichtung gemäß einem der Ansprüche 1 bis 9, dadurch gekennzeichnet, daß die Dosierkammer (26) mit der Abgabekammer (24b) verbunden werden kann über ein Auslaßventil (40), dessen Sitz durch eine fest in der Bodenwand der genannten Dosierkammer (26) sitzende Düse gebildet wird, daß die Abgabekammer (24b) aus einem querliegenden Endstück einer Leitung (49) besteht, das horizontal unter der Dosierkammer (26) und senkrecht zur Achse derselben vorgesehen ist, und dadurch, daß sich die Klappe (40a) des in der Abgabekammer (24b) vorgesehenen Auslaßventils (40) in Entleerungsrichtung des Produkts durch die genannte festsitzende Düse (40b) hindurch öffnet.

11. Dosier- und Abgabevorrichtung gemäß einem der Ansprüche 1 bis 9, dadurch gekennzeichnet, daß die Schließvorrichtung des Auslaßventils (40) aus einer Klappe (40a) besteht, deren Sitz (40b) aus dem oberen Ende mindestens eines festen Auslaßstutzens (46) besteht, der in die Abgabekammer (24b) mündet, und daß besagte Klappe (40a) das genannte Auslaßventil (40) öffnet, indem sie sich in entgegengesetzter Richtung zur Entleerungsrichtung des Stoffs durch den Auslaßstutzen (46) öffnet.

12. Dosier- und Abgabevorrichtung gemäß einem der Ansprüche 1 bis 9, dadurch gekennzeichnet, daß die Schließvorrichtung des Auslaßventils (40) aus einem Vollschaft (40a) zum Verschließen und der Sitz des genannten Ventils aus einer festsitzenden Auslaßdüse (40b) besteht, die am unteren Ende der Abgabekammer (24b) vorgesehen ist, in die fest abgedichtet das untere Ende des besagten Vollschafts (40a) führt, dessen oberes Ende fest mit dem unteren Ende der dritten Steuerröhre (42) verbunden ist.

13. Dosier- und Abgabevorrichtung gemäß einem der Ansprüche 1 bis 9, dadurch gekennzeichnet, daß die Schließvorrichtung des Auslaßventils (40) aus einem axial beweglichen Auslaßstutzen (40a) besteht, der an beiden Enden verschlossen ist und nahe an jedem Ende mindestens eine seitliche Öffnung (41a, 41b) aufweist, daß der Sitz des besagten Ventils aus einer Düse mit zylindrischer Führung (40b) besteht, die in der Bodenwand der Abgabekammer (24b) vorgesehen ist, und in die der Auslaßstutzen geführt wird, dessen untere seitliche Öffnung (41b) sich bei geschlossenem Auslaßventil (40) innerhalb der Düse mit zylindrischer Führung (40b) befindet, sowie dadurch, daß das obere Ende des Auslaßstutzens (40a) am unteren Ende der dritten Steuerröhre (42) befestigt ist, die achsgleich mit dem genannten Ablaßstutzen (40a) angeordnet ist, und daß bei geschlossenem Auslaßventil (40) die Länge des Endstücks (42a) der dritten Steuerröhre (42), das in die Abgabekammer (24b) führt, deutlich gleich der Länge des Auslaßstutzens (40a) innerhalb der besagten Abgabekammer (24b) ist, und daß der Außendurchmesser des dritten Faltenbalgs (43), der die besagte dritte Röhre (42) umläuft, den Durchmesser des besagten Auslaßstutzens (40a) geringfügig übersteigt, so daß der von besagtem Auslaßstutzen (40a) bei der Abwärtsbewegung zürückgehende Umfang in der genannten Abgabekammer (24b) durch den erhöhten Umfang des besagten Faltenbalgs (43) innerhalb der genannten Abgabekammer (24b) ausgeglichen wird.

14. Dosier- und Abgabevorrichtung gemäß einem der Ansprüche 1 bis 13, dadurch gekennzeichnet, daß der zentrale Durchlaß (31) des Dosierkolbens (28, 28″) eine kegelstumpfartige Form aufweist und sich von der Aufgabekammer (25) zur Dosierkammer (26) hin erweitert.

15. Dosier- und Abgabevorrichtung gemäß einem der Ansprüche 1 bis 14, dadurch gekennzeichnet, daß der Dosierkolben (28) an seinem äußeren Umfang über eine ringförmige Dichtung (33) mit zwei Lippen (33a, 33b) verfügt, die eine ringförmige Rille (33c) bilden, die in Richtung der Aufgabekammer (25) offen ist.

16. Dosier- und Abgabevorrichtung gemäß einem der Ansprüche 1 bis 15, dadurch gekennzeichnet, daß der Dosierkolben (28) am unteren Ende der ersten Steuerröhre (2) mit einem Querflansch (29) befestigt ist, der fest mit der besagten Röhre (2) verbunden ist, sowie über mehrere parallel zur besagten Röhre (2) sitzende Abstandsstifte (30) verfügt, die außen am Flansch (29) sowie am besagten Dosierkolben (28) zwischen dem zentralen Durchlaß (31) und der Dichtung (33) desselben befestigt sind, und daß der Faltenbalg (38) der zweiten Steuerröhre (35) in dem Raum zwischen dem Dosierkolben (28) und dem Querflansch (29) sitzt.

17. Dosier- und Abgabevorrichtung gemäß einem der Ansprüche 1 bis 15, dadurch gekennzeichnet, daß der Dosierkolben (28″) die Form eines zylindrischen Topfs aufweist, der nach oben in Richtung der Aufgabekammer (25) offen ist, dessen oberer Rand mit Hilfe mehrerer Radialarme (50) am unteren Teil der ersten Steuerröhre (2) befestigt ist, an dessen Boden sich der zentrale Durchlaß (31) und der Sitz (32b) des Einlaßventils (32) befindet, und dessen Seitenwand dicht schließend mit einer Ringdichtung (51), die an der Wand des ersten Behälters (3) am oberen Ende der Dosierkammer (26) befestigt ist, geführt wird, sowie dadurch, daß die Klappe (32a) des Einlaßventils (32) und der Faltenbalg (38) der zweiten Steuerröhre (35) innerhalb des zylindrischen Topfs des besagten Dosierkolbens (28″) sitzen.

18. Dosier- und Abgabevorrichtung gemäß Anspruch 17, dadurch gekennzeichnet, daß der Dichtring (51) zwei ringförmige, übereinander liegende Rillen (51a, 51b) aufweist, von denen die eine zur Aufgabekammer (25) hin und die andere zur Dosierkammer (26) hin offen ist.

19. Dosier- und Abgabevorrichtung gemäß einem der Ansprüche 1 bis 18, dadurch gekennzeichnet, daß eine zweite Dosier- und Abgabevorrichtung (20′) für einen zweiten in einem zweiten Lagertank enthaltenen pastösen und/oder flüssigen Stoff zur ersten Dosier- und Abgabevorrichtung (20 oder 20″) hinzukommt und dieser vorgeschaltet wird, daß diese zweite Dosier- und Abgabevorrichtung (20′) in einem zweiten zylindrischen Behälter (3) über einen zweiten Dosierkolben (28) verfügt, der über einen zentralen Durchlaß (31) verfügt, der mit einem zweiten Einlaßventil (32) verschließbar ist und besagten zweiten Behälter (3) einerseits in eine zweite, oben gelegene Aufgabekammer (25), die über eine zweite Zuführleitung (22′) an einen zweiten Stofftank angeschlossen ist, und andererseits in eine zweite, unten gelegene Dosierkammer (26) teilt, deren Boden über ein zweites Auslaßventil (40) in die Zuführleitung (22, 49) der ersten Dosier- und Abgabevorrichtung (20 oder 20′) mündet, und dadurch, daß das zweite Auslaßventil (40) über einen Sitz (40b) verfügt, der die Austrittsöffnung, die im Boden der Dosierkammer (26) sitzt, umgibt, sowie über eine Klappe (40a), die unter der besagten Dosierkammer (26) in der Zuführleitung (22, 49) der ersten Dosier- und Abgabevorrichtung (20, 20″) vorgesehen ist und vom oberen Ende der dritten Steuerröhre (42) getragen wird, deren in besagte Zuführleitung (22, 49) reichender Teil von einem Faltenbalg (43) umgeben ist, und deren unteres, außerhalb der besagten Zuführleitung (39) gelegenes Ende in einen Zylinder (45) paßt, der die besagte Klappe (40a) gegen ihren Sitz (40b) in entgegengesetzter Richtung zur Richtung des aus der zweiten Dosierkammer (25) ausgelassenen Stoffs bewegt.

20. Dosier- und Abgabevorrichtung gemäß Anspruch 19, dadurch gekennzeichnet, daß ein Stoffmischer (52) in der Zuführleitung (22, 49) zwischen dem Ausgang der zweiten Dosierkammer (26) der zweiten, vorne angeordneten Dosierund Abgabevorrichtung (20′) und dem Eingang (21) in die Aufgabekammer (25) der ersten, hinten angeordneten Dosierund Abgabevorrichtung (20, 20″) vorgesehen ist, und daß dieser Mischer (52) über mindestens ein Paar Mischschaufeln (55, 55a, 55b) verfügt, die am unteren Teil einer vierten Steuerröhre (54) vorgesehen sind, die axial beweglich in einer Mischkammer (53) ist, deren oben gelegener Eingang (53b) an die Dosierkammer (26) der zweiten, vorderen Dosier- und Abgabevorrichtung (20′) und an den Ausgang des ersten Lagertanks angeschlossen ist, und deren unten gelegener Ausgang (53c) an den Eingang (21) der Aufgabekammer (25) der ersten, hinteren Dosier- und Abgabevorrichtung (20, 20″) angeschlossen ist, sowie dadurch, daß ein Faltenbalg (56) die vierte Steuerröhre (54) an der Stelle umgibt, wo sie in die Mischkammer (53) reicht, außerhalb derer die besagte vierte Röhre (54) über einen Steuerkolben (57a) verfügt, der fest und dicht in einem Zylinder (57) verschiebbar ist und im Inneren desselben eine Kammer (57b), die an eine Druckluftquelle angeschlossen werden kann, von einer Kammer (57c) mit einer Spannfeder (57d) trennt.

21. Dosier- und Abgabevorrichtung gemäß Anspruch 20, dadurch gekennzeichnet, daß der Mischer (52) mindestens zwei Paar übereinander angeordneter Mischschaufeln (55a, 55b) aufweist, wobei ein Paar rechts- und das andere Paar linksdrehend ist.


## Claims

1. Doser-dispenser (20, 20′, 20″) for at least one pasty and/or liquid product contained under pressure in at least a first storage reservoir, doser-dispenser of the type comprising in a first cylindrical housing (3), on the one hand, an upper supply chamber (25) connected, by a supply conduit (22, 22′), to said first reservoir, and, on the other hand, a lower dosing chamber (26) separated from said supply chamber (25) by a doser-piston (28) fixed to the lower end of a control member (2) penetrating in said first housing (3) and sliding in tight manner in said first housing (3) and provided with a central passage (31) adapted to be obturated by an intake valve (32) of which the obturation member (32a) urged by a return spring (18) is guided with respect to said piston (28) and cooperates with a valve seat (32b) surrounding said central passage (31), a dispensing chamber (24b) provided downstream of the dosing chamber (26), as well as an ejection valve (40) of which the obturation member (40a), loaded by a spring (45b), is disposed in said dispensing chamber (24b), characterized in that the control member of the doser-piston (28, 28″) is constituted by a first control tube (2) of which the end adjacent the intake valve (32) is obturated in tight manner, in that the obturation member such as a flap (32a) of the intake valve (32) is situated on the side of the supply chamber (25) and is carried by the lower closed end of a second control tube (35) guided in the first tube (2) and extending beyond the lower end thereof, in that on its section (2a, 35a) penetrating in the housing (3), each control tube (2, 35) is surrounded by a bellows (6, 38), in that the annular space (9) existing between the section (2a) of the first control tube (2), section (2a) penetrating in the housing (3) and the first bellows (6) is permanently connected to the outside atmosphere, in that the upper end (6a) of the first bellows (6) surrounding the first control tube (2) is fixed in tight manner on the housing wall (3a) traversed by said first tube (2) and the lower end (6b) of the first bellows (6) is fixed in tight manner on the lower end part of said first tube (2), in that the upper end (38a) of the second bellows (38) surrounding the second control tube (35) over its section (35a) extending beyond the lower end of the first control tube (2) is fixed in tight manner on the lower end of the first tube (2) below the first bellows (6), whilst the lower end (38b) of the second bellows (38) is fixed in tight manner on the lower end of the second tube (35) or on the intake flap (32a) integral with said second tube (35), and in that the upper end part of the second control tube (35) is guided in tight manner in the first tube (2) and presents, at its upper end, a control piston (36) which separates the volume of the first tube (2) into two chambers (2c, 2d) of which one is connected to atmosphere and comprises the return spring (18) acting on the intake flap (32a) and of which the other is capable of being connected alternately to a source of compressed air or to atmosphere, the pressure of compressed air established in said other chamber acting on said intake flap (32a) in the direction opposite that of return spring (18).

2. Doser-dispenser according to claim 1, characterized in that the obturation member 40a of the ejection valve 40 is carried by the closed end of a third control tube (42) which, on its section (42a), penetrating in the dispensing chamber (24b) of the housing (24) is surrounded by a third bellows (43) whose ends are fixed in tight manner, on the one hand, on the side of the obturation member 40a of the ejection valve (40), on said third tube (42) and, on the other hand, on the housing wall (24a) traversed by said third control tube (42) of which the other end carries, outside said housing (24) traversed by the product, a control piston (45a) of a jack (45) comprising two chambers (45c, 45d) of which one (45d) is capable of being connected alternately to the outside atmosphere or to a source of compressed air and of which the other (45c) is provided with a return spring (45b) acting on said piston (45a) and the obturation member (40a), against the air pressure established in the chamber (45d), in the direction of opening or closure of the ejection valve (40).

3. Doser-dispenser according to one of claims 1 and 2, characterized in that each annular fold (6d) of each bellows (6, 38, 43) is associated with a rigidifying ring (8) disposed in said bellows (6, 38, 43) and capable of sliding along the corresponding control tube (2, 35, 42) and in that the annular space (9) between each bellows (6, 38, 43) and the corresponding tube (2, 35, 42) communicates permanently with the outside atmosphere.

4. Doser-dispenser according to one of claims 1 to 3, characterized in that the upper part of the first control tube (2) is designed as control jack (2c, 2d, 36) of which the control piston (36) fast with the upper end of the second control tube (35) separates said upper part into an upper chamber (2c) located permanently outside the first housing (3), and into a lower chamber (2d) provided in a section of the first tube (2), section capable of penetrating in the housing (3) during the descending movement of the doser-piston 28, in that the upper chamber (2c) is capable of being alternately connected to a source of compressed air or to atmosphere, whilst the lower chamber (2d) is provided with the return spring (18) which surrounds the upper part of the second control tube (35) and abutting, on the one hand, against an inner shoulder (2i) of the first tube (2) and, on the other hand, the lower face of the control piston (36) acts in the direction of opening of the intake valve (32) against the compressed air pressure established periodically in the upper chamber (2c).

5. Doser-dispenser according to claim 1, characterized in that the first control tube (2) comprises a plurality of passages (2b) connecting the interior of the tube (2), on the one hand, to the annular space (9) existing between the section of tube (2a) and the bellows (6) and, on the other hand, to the outside atmosphere.

6. Doser-dispenser according to one of claims 3 to 5, characterized in that each end (6a, 6b) of at least one bellows (6) comprises a half-fold (6e, 6f) associated with a bearing shoulder (10a, 10b) of which the face opposite the bellows (6) is perpendicular to the axis of the control tube (2) and parallel to the rigidifying rings (8), in that the bearing shoulder (10a) located at the level of the upper housing wall (3a) is provided on said wall (3a) traversed by the control tube (2), in that the bearing shoulder (10b) located towards the manoeuvring element (4), such as a doser-piston (28) is integral with said tube (2), and in that in compacted position of the bellows (6), each fold (6d) of the latter (6) is applied, on the one hand, against an adjacent fold and, on the other hand, against the rigidifying ring (8) covered by said fold and each extreme half-fold (6e, 6f) bears against the corresponding bearing shoulder (10a or 10b).

7. Doser-dispenser according to one of claims 1 to 6, characterized in that at least one bellows (6) comprises at each end (6a, 6b) a profiled fixing bead (6g) to which is joined a corresponding extreme half-fold (6e or 6f) of the bellows (6), the annular grooves and ribs of said profiled bead (6g) cooperating with a retaining housing of corresponding shape provided either on the bearing shoulder (10a, 10b), on the wall of the housing (3a), or on the end of the control tube (2), end bearing the manoeuvring element (4), such as a doser-piston (28).

8. Doser-dispenser according to one of claims 1 to 7, characterized in that the annular space (9) between the bellows (6, 38, 43) and the control tube (2, 35, 42) is connected to the outside atmosphere through a plurality of passages (2b, 35b) made in the section of tube located opposite the bellows (6, 38, 43), as well as through at least one orifice (2b) provided in said tube in the part located permanently outside the housing (24).

9. Doser-dispenser according to claim 1, characterized in that the outlet (23) of the dosing chamber (26) is connected to a housing called dispensing chamber (24b) by a connecting conduit (47) of which one end is connected directly to the outlet of the dosing chamber (26) and of which the other end opens out in the dispensing chamber (24b) in which is disposed the ejection valve (40), and in that the control piston (45a) of the obturation member (40a) of said valve (40) is disposed in a jack chamber (45d) capable of being connected to a source of compressed air acting on said piston (45a) in the direction of opening or closure of the ejection valve (40) and against the return spring (45b) bearing against said piston.

10. Doser-dispenser according to one of claims 1 to 9, characterized in that the dosing chamber (26) is capable of being connected to the dispensing chamber (24b) through the ejection valve (40) of which the seat is constituted by a fixed nozzle provided in the bottom wall of said dosing chamber (26), in that the dispensing chamber (24b) is constituted by a transverse section of conduit (49) disposed horizontally below the dosing chamber (26) and perpendicularly to the axis thereof, and in that the flap (40a) of the ejection valve (40) disposed in the dispensing chamber (24b), opens in the direction of flow of the product through said fixed nozzle (40b).

11. Doser-dispenser according to any one of claims 1 to 9, characterized in that the obturation member of the ejection valve (40) is a flap (40a) of which the seat (40b) is constituted by the upper end of at least one fixed ejection tube (46) opening out in the dispensing chamber (24b), and said flap (40a) opens said ejection valve (40) on moving in the direction opposite the direction of flow of the product through the ejection tube (46).

12. Doser-dispenser according to one of claims 1 to 9, characterized in that the obturation member of the ejection valve (40) is constituted by a solid obturation rod (40a) and the seat of said valve is constituted by a fixed ejection nozzle (40b) provided at the lower end of the dispensing chamber (24b) in which penetrates, in tight manner, the lower end of said solid rod (40a) of which the upper end is integral with the lower end of the third control tube (42).

13. Doser-dispenser according to one of claims 1 to 9, characterized in that the obturation member of the ejection valve (40) is constituted by an axially mobile ejection tube (40a) obturated at the two ends and comprising, near each end, at least one lateral opening (41a, 41b), in that the seat of said valve is constituted by a cylindrical guiding nozzle (40b) provided in the bottom wall of the dispensing chamber (24b) and in which is guided the ejection tube of which the lower lateral opening (41b) is located inside the cylindrical guiding nozzle (40b) in closed position of the ejection valve (40), in that the upper end of the ejection tube (40a) is fixed on the lower end of the third control tube (42) disposed coaxially to said ejection tube (40a), and in that, in closed position of the ejection valve (40), the length of the section (42a) of the third control tube (42), section penetrating in the dispensing chamber (24b), is substantially equal to the length of the ejection tube (40a) inside said dispensing chamber (24b) and the outer diameter of the third bellows (43) surrounding said third tube (42) is slightly larger than that of said ejection tube (40a), with the result that, when the ejection tube (40a) lowers, the reduction in the volume occupied by said ejection tube (40a) in said dispensing chamber (24b) is compensated by the increase in the volume occupied by said bellows (43) inside said dispensing chamber (24b).

14. Doser-dispenser according to one of claims 1 to 13, characterized in that the central passage (31) of the doser-piston (28, 28″) presents a truncated form which widens from the supply chamber (25) towards the dosing chamber (26).

15. Doser-dispenser according to one of claims 1 to 14, characterized in that the doser-piston (28) comprises on its periphery an annular O-ring (33) with two lips (33a, 33b) which define an annular groove (33c) open in the direction of the supply chamber (25).

16. Doser-dispenser according to one of claims 1 to 15, characterized in that the doser-piston (28) is fixed to the lower end of the first control tube (2) via transverse flange (29) integral with said tube (2) and a plurality of spacer rods (30) parallel to said tube (2) and fixed to the periphery of the flange (29) and on said doser-piston (28) between the central passage (31) and the O-ring (33) thereof, and in that the bellows (38) of the second control tube (35) is located in the space included between the doser-piston (28) and the transverse flange (29).

17. Doser-dispenser according to one of claims 1 to 15, characterized in that the doser-piston (28″) presents the shape of a cylindrical pot upwardly open in the direction of the supply chamber (25), of which the upper edge is fixed with the aid of a plurality of radial arms (50), to the lower extreme part of the first control tube (2), of which the bottom comprises the central passage (31) and the seat (32b) of the intake valve (32) and of which the lateral wall is guided in tight manner by an annular O-ring (51) fixed to the wall of the first housing (3) at the upper end of the dosing chamber (26), and the flap (32a) of the intake valve (32) and the bellows (38) of the second control tube (35) are disposed inside the cylindrical pot of said doser-piston (28″).

18. Doser-dispenser according to claim 17, characterized in that the annular O-ring (51) comprises two superposed annular grooves (51a, 51b) of which one is open towards the supply chamber (25) and the other towards the dosing chamber (26).

19. Doser-dispenser according to one of claims 1 to 18, characterized in that a second doser-dispenser (20′) for a second pasty and/or liquid product contained in a second storage reservoir is associated with the first doser-dispenser (20 or 20″) and provided upstream thereof, in that this second doser-dispenser (20′) comprises in a second cylindrical housing (3) a second doser-piston (28) provided with a central passage (31) adapted to be obturated by a second intake valve (32), and separating said second housing (3) on the one hand, into a second upper supply chamber (25) connected by a second supply conduit (22′) to a second product reservoir and, on the other hand, into a second lower dosing chamber (26) of which the bottom opens out through a second ejection valve (40) into the supply conduit (22, 49) of the first doser-dispenser (20 or 20′), and in that the second ejection valve (40) comprises a seat (40b) surrounding the outlet opening made in the bottom of the dosing chamber (26) as well as a flap (40a) provided below said dosing chamber (26) in the supply conduit (22, 49) of the first doser-dispenser (20, 20″) and carried by the upper end of the third control tube (42) of which the part penetrating in said supply conduit (22, 49) is surrounded by a bellows (43) and of which the lower end located outside said supply conduit (39) cooperates with a jack (45) urging said flap (40a) against its seat (40b) in the direction contrary to that of the product expelled from the second dosing chamber (25).

20. Doser-dispenser according to claim 19, characterized in that a mixer of products (52) is interposed in the supply conduit (22, 49) between the outlet of the second dosing chamber (26) of the second upstream doser-dispenser (20′) and the inlet (21) in the supply chamber (25) of the first downstream doser-dispenser (20, 20″), and in that this mixer (52) comprises at least one pair of mixing blades (55, 55a, 55b) provided in the lower part of a fourth control tube (54) axially mobile in a mixing chamber (53) of which the upper inlet (53b) is connected to the dosing chamber (26) of the second upstream doser-dispenser (20′) and to the outlet of the first storage reservoir and of which the lower outlet (53c) is connected to the inlet (21) of the supply chamber (25) of the first downstream doser-dispenser (20, 20″), and in that a bellows (56) surrounds the fourth control tube (54) on the part penetrating in the mixing chamber (53) outside which said fourth tube (54) carries a control piston (57a) sliding in tight manner in a jack (57) and separating inside the latter a chamber (57b) capable of being connected to a source of compressed air, from a chamber (57c) containing a return spring (57d).

21. Doser-dispenser according to claim 20, characterized in that the mixer (52) comprises at least two superposed pairs of mixing blades (55a, 55b) of which a first pair presents a right-hand pitch and of which the other pair presents a left-hand pitch.

FIG.1

FIG.2a

# FIG. 2b

FIG.3

FIG.4

FIG.5

FIG. 6

FIG. 7

FIG.8

FIG.9

FIG.10